(19) Europäisches Patentamt
European Patent Office
Office européen des brevets

(11) Veröffentlichungsnummer: **0 009 115 B1**

(12) # EUROPÄISCHE PATENTSCHRIFT

(45) Veröffentlichungstag der Patentschrift: **12.05.82**

(51) Int. Cl.³: **C 07 F 9/15**, C 08 L 77/00, C 08 K 5/52

(21) Anmeldenummer: **79102928.3**

(22) Anmeldetag: **13.08.79**

(54) **Neue Phosphorigsäureester und ihre Verwendung zur Stabilisierung von Polyamiden.**

(30) Priorität: **24.08.78 DE 2837027**

(43) Veröffentlichungstag der Anmeldung: **02.04.80 Patentblatt 80/7**

(45) Bekanntmachung des Hinweises auf die Patenterteilung: **12.05.82 Patentblatt 82/19**

(84) Benannte Vertragsstaaten: **BE CH DE FR GB IT NL SE**

(56) Entgegenhaltungen:
**DE-B-1 259 094**
**DE-A1-2 725 649**
**FR-A-1 324 451**
**GB-A-1 214 125**
**US-A-3 297 631**

(73) Patentinhaber: **BAYER AG, Zentralbereich Patente, Marken und Lizenzen, D-5090 Leverkusen 1, Bayerwerk (DE)**

(72) Erfinder: **Buysch, Hans-Josef, Dr., Brandenburger Strasse 28, D-4150 Krefeld (DE)**
Erfinder: **Brassat, Bert, Dr., Bethelstrasse 24, D-4150 Krefeld (DE)**
Erfinder: **Eimers, Erich, Dr., Kreuzbergstrasse 136, D-4150 Krefeld (DE)**
Erfinder: **Hermann, Karl Heinz, Dr., Scheiblerstrasse 111, D-4150 Krefeld (DE)**

EP 0 009 115 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Neue Phosphorigsäureester und ihre Verwendung zur Stabilisierung von Polyamiden

Vorliegende Erfindung betrifft neue Phosphorigsäureester und ihre Verwendung als Stabilisatoren für Polyamide.

Es ist bekannt, Polyamide durch Zusatz von Kupferverbindungen in Kombination mit Halogenverbindungen gegen thermischen und oxydativen Abbau zu stabilisieren. Wenn auch eine solche Stabilisierung sehr wirksam ist, hat sie doch gravierende Nachteile:

Wichtige elektrische Eigenschaften der Polyamide, wie Oberflächenwiderstand, spez. Durchgangswiderstand, dielektrischer Verlustfaktor, Kriechstromfestigkeit und elektrische Korrosionswirkung der Polyamide werden — insbesondere nach dem Konditionieren — durch den Zusatz ionischer Stabilisatoren erheblich verschlechtert.

Ferner blühen ionische Stabilisatoren infolge ihrer Wasserlöslichkeit häufig aus, bilden dabei Fehlstellen wie Flecken oder Verfärbungen auf der Oberfläche von Polyamidartikeln und machen sie unansehnlich.

Schließlich sind Cu-Stabilisatoren mit einigen Farbpigmenten, besonders schwefelhaltigen, beim Einarbeiten in Polyamide unverträglich und verändern die Farbe in unerwünschter Weise.

Man hat daher schon seit längerer Zeit nicht ionische Stabilisatoren auf Basis von aromatischen Amino- und Hydroxy- und auch Phosphorverbindungen vorgeschlagen, die die genannten Nachteile nicht aufweisen. Diese haben jedoch oft eine zu geringe bzw. mäßige Stabilisatorwirkung oder verursachen häufig schon beim Einarbeiten ins Polyamid besonders aber bei Lichteinwirkung starke Verfärbungen. Letzteres gilt insbesondere für aromatische Amine.

Ein Ziel der vorliegenden Erfindung war es daher, hochwirksame, nicht ionische und nichtverfärbende Stabilisatoren für Polyamide zu entwickeln.

Phosphorigsäureester der nachfolgenden allgemeinen Formel (I) erfüllen diese Bedingungen. Sie besitzen eine hervorragende Stabilisatorwirkung bei Polyamiden, die die der bisher vorgeschlagenen und handelsüblichen Stabilisatoren z. T. erheblich übertrifft. Dies war keineswegs zu erwarten, denn den erfindungsgemäßen Phosphorigsäureestern ähnlich gebaute Substanzen, wie sie gemäß der Lehre der US-PS 3 297 631 oder FR-PS 1 324 451 zur Stabilisierung von Polyolefinen empfohlen werden, sind nur sehr schwach oder überhaupt nicht wirksam.

Die Wirkungsweise der erfindungsgemäß eingesetzten Phosphorsäureester ist aber auch nicht durch die Lehre der GB-PS 1 214 125 zu erkennen, nach der halogenierte Phosphorsäureester als Flammschutzmittel für Kunststoffe verwendet werden, da die analogen nicht halogenierten Verbindungen als Polyamidstabilisatoren wirkungslos sind.

Gegenstand der vorliegenden Erfindung sind daher neue Phosphorigsäureester der allgemeinen Formel I

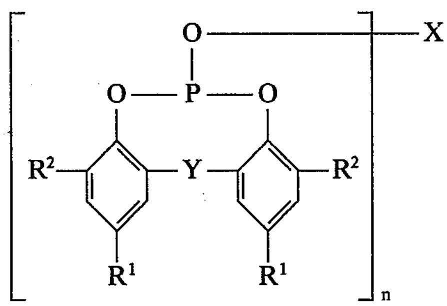

(I)

in der

$R^2$ einen Benzyl-, $\alpha$-Methylbenzyl-, $\alpha,\alpha$-Dimethylbenzyl-, Cyclopentyl- oder Cyclohexylrest darstellt,

$R^1$ einen $C_1-C_9$-Alkylrest, einen $C_5-C_6$-Cycloalkylrest, einen $C_7-C_9$-Aralkylrest oder einen $C_6-C_{10}$-Arylrest bedeutet,

Y für S oder $HC-R^3$ steht, wobei $R^3 = H$, $C_1-C_6$-Alkyl- oder Cyclohexylrest sein kann,

X ein Wasserstoffatom, einen gegebenenfalls substituierten ein- bis vierbindigen geradkettigen oder verzweigten $C_1-C_{18}$ aliphatischen Rest, einen $C_7-C_{18}$-Aralkylrest oder einen $C_6-C_{18}$ aromatischen Rest bedeutet, wobei jeder der Reste olefinische Doppelbindungen und/oder Heteroatome, vorzugsweise N, O und/oder S, enthalten kann, und

n eine ganze Zahl von 1—4, vorzugsweise 1—2, mit der Bedingung, daß für X = H, n = 1 ist,

und die Verwendung dieser Verbindungen zur Stabilisierung von Polyamiden.

Als Substituenten der zu X genannten Reste eignen sich vorzugsweise OH, $C_1-C_4$-Alkoxy-, Amino-, $C_1-C_8$-Alkylamino-, $C_1-C_8$-Dialkylamino-, SH, $C_1-C_4$-Alkylmercapto-, $C_1-C_{12}$-Alkyl-, $C_7-C_{12}$-Aralkyl-, $C_6-C_{10}$-Aroxy- und $C_6-C_{10}$-Arylgruppen.

Vorzugsweise kann $R^1$ beispielsweise sein $CH_3$, $C_2H_5$, $HC(CH_3)_2$, $C(CH_3)_3$, $C(CH_3)_2C_2H_5$, Isononyl, Isooctyl, Benzyl, Styryl, $\alpha$-Methylstyryl, Cyclohexyl, Cyclopentyl, besonders $CH_3$, $HC(CH_3)_2$, $C(CH_3)_3$,

Cyclohexyl, α-Methylstyryl, Isononyl. Besonders bevorzugt von diesen Resten sind wieder $CH_3$, $C_2H_5$, $HC(CH_3)_3$, Cyclohexyl, Benzyl, Styryl und ganz besonders bevorzugt $CH_3$, $C_2H_5$.

X steht vorzugsweise für ein Wasserstoffatom, einen Rest der allgemeinen Formel (II)

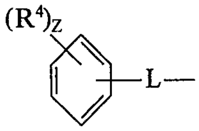

(II)

mit $R^4$ = Wasserstoff, $-L-$, Aryl-, ein kondensierter Ring, ein $C_1$–$C_9$-Alkyl-, $C_7$–$C_{12}$-Alkaryl-, $C_1$–$C_4$-Alkylmercapto-, $C_1$–$C_4$-Alkoxy-, β-Hydroxyalkoxyrest, eine OH-, Amino-SH-Gruppe oder ein

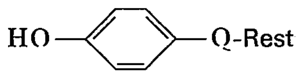

mit Q eine einfache Bindung, O, S, $O-(CH_2)_2-O$, $C_1$–$C_4$-Alkyliden und

Z = 1 oder 2

L = eine einfache Bindung oder Alkylenoxy

oder einen Rest der allgemeinen Formel (III)

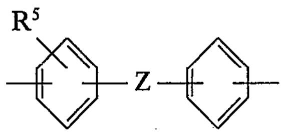

(III)

mit $R^5$ = OH, H,

Z = eine einfache Bindung, ein $C_1$–$C_4$-Alkylidenrest, O, S oder $O-(CH_2)_2-O$,

oder einen ein- oder zweiwertigen $C_1$–$C_{18}$-Alkylrest, der durch Phenyl, OH oder Phenoxy substituiert ist und gegebenenfalls über Ätherbrücken oder S-Brücken verbunden sein kann, einen $C_1$–$C_9$-Alkyl-, Cyclohexyl- oder Tetralylrest, oder einen Rest der allgemeinen Formel IV

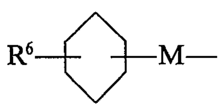

(IV)

mit $R^6$ = H, –M–, ein Hydroxylalkyl-, ein Hydroxyalkoxy-, Alkylenrest, OH oder eine Bindung und

M = einen Alkylen, Alkylencycloalkylrest bedeuten.

Außerdem kann X für

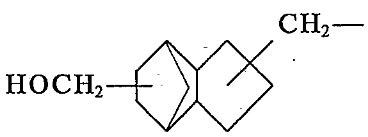

oder

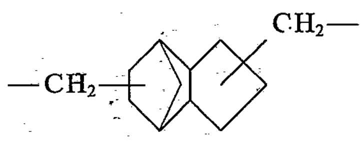

oder Oxyalkylierungsprodukte von Glycerin, Trimethylolpropan oder Pentaerythrit mit 3–8 Oxyäthyl- oder Oxypropylresten stehen.

Bevorzugt sind folgende Verbindungen (entsprechend der allgemeinen Formel I)

| | | | | | |
|---|---|---|---|---|---|
| 1) | Y = $CH_2$ | X = Phenyl | $R^1$ = $CH_3$ | $R^2$ = Cyclohexyl | n = 1 |
| 2) | Y = $CH_2$ | X = Phenyl | $R^1$ = $CH_3$ | $R^2$ = Benzyl | n = 1 |
| 3) | Y = $CH_2$ | X = Phenyl | $R^1$ = $CH_3$ | $R^2$ = $\alpha$-Methylbenzyl | n = 1 |
| 4) | Y = S | X = Phenyl | $R^1$ = $CH_3$ | $R^2$ = Cyclohexyl | n = 1 |
| 5) | Y = S | X = Phenyl | $R^1$ = $CH_3$ | $R^2$ = Benzyl | n = 1 |
| 6) | Y = S | X = Phenyl | $R^1$ = $CH_3$ | $R^2$ = $\alpha$-Methylbenzyl | n = 1 |
| 7) | Y = $CH_2$ | X = o-, m-, p-Kresyl | $R^1$ = $CH_3$ | $R^2$ = $\alpha$-Methylbenzyl | n = 1 |
| 8) | Y = $CH_2$ | X = o-, m-, p-Kresyl | $R^1$ = $CH_3$ | $R^2$ = Benzyl | n = 1 |
| 9) | Y = $CH_2$ | X = o-, m-, p-Kresyl | $R^1$ = $CH_3$ | $R^2$ = Cyclohexyl | n = 1 |
| 10) | Y = $CH_2$ | X = Isononylphenyl | $R^1$ = $CH_3$ | $R^2$ = Cyclohexyl | n = 1 |
| 11) | Y = $CH_2$ | X = Isononylphenyl | $R^1$ = $CH_3$ | $R^2$ = Benzyl | n = 1 |
| 12) | Y = $CH_2$ | X = Isononylphenyl | $R^1$ = $CH_3$ | $R^2$ = $\alpha$-Methylbenzyl | n = 1 |
| 13) | Y = $CH_2$ | X = $\beta$-Naphthyl | $R^1$ = $CH_3$ | $R^2$ = Cyclohexyl | n = 1 |
| 14) | Y = $CH_2$ | X = $\beta$-Naphthyl | $R^1$ = $CH_3$ | $R^2$ = Benzyl | n = 1 |
| 15) | Y = $CH_2$ | X = $\beta$-Naphthyl | $R^1$ = $CH_3$ | $R^2$ = $\alpha$-Methylbenzyl | n = 1 |
| 16) | Y = $CH_2$ | X = H | $R^1$ = $CH_3$ | $R^2$ = Cyclohexyl | n = 1 |
| 17) | Y = $CH_2$ | X = H | $R^1$ = $CH_3$ | $R^2$ = Benzyl | n = 1 |
| 18) | Y = $CH_2$ | X = H | $R^1$ = $CH_3$ | $R^2$ = $\alpha$-Methylbenzyl | n = 1 |
| 19) | Y = $CH_2$ | X = Benzylphenyl | $R^1$ = $CH_3$ | $R^2$ = Cyclohexyl | n = 1 |
| 20) | Y = $CH_2$ | X = Benzylphenyl | $R^1$ = $CH_3$ | $R^2$ = Benzyl | n = 1 |
| 21) | Y = $CH_2$ | X = Benzylphenyl | $R^1$ = $CH_3$ | $R^2$ = $\alpha$-Methylbenzyl | n = 1 |
| 22) | Y = $CH_2$ | X = Phenylphenyl | $R^1$ = $CH_3$ | $R^2$ = Cyclohexyl | n = 1 |
| 23) | Y = $CH_2$ | X = Phenylphenyl | $R^1$ = $CH_3$ | $R^2$ = Benzyl | n = 1 |
| 24) | Y = $CH_2$ | X = Phenylphenyl | $R^1$ = $CH_3$ | $R^2$ = $\alpha$-Methylbenzyl | n = 1 |
| 25) | Y = $CH_2$ | X = 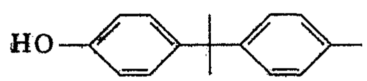 | $R^1$ = $CH_3$ | $R^2$ = Cyclohexyl | n = 1 |
| 26) | Y = $CH_2$ | X = 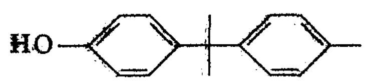 | $R^1$ = $CH_3$ | $R^2$ = Benzyl | n = 1 |

Fortsetzung

| | | | | | |
|---|---|---|---|---|---|
| 27) | Y = $CH_2$ | X = 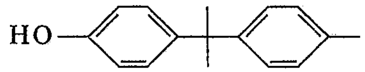 | $R^1$ = $CH_3$ | $R^2$ = α-Methylbenzyl | n = 1 |
| 28) | Y = $CH_2$ | X = 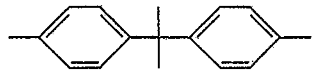 | $R^1$ = $CH_3$ | $R^2$ = Cyclohexyl | n = 2 |
| 29) | Y = $CH_2$ | X = 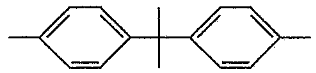 | $R^1$ = $CH_3$ | $R^2$ = Benzyl | n = 2 |
| 30) | Y = $CH_2$ | X = 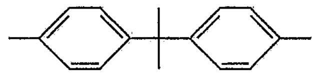 | $R^1$ = $CH_3$ | $R^2$ = α-Methylbenzyl | n = 2 |
| 31) | Y = $CH_2$ | X = Stearyl | $R^1$ = $CH_3$ | $R^2$ = Cyclohexyl | n = 1 |
| 32) | Y = $CH_2$ | X = Stearyl | $R^1$ = $CH_3$ | $R^2$ = Benzyl | n = 1 |
| 33) | Y = $CH_2$ | X = Stearyl | $R^1$ = $CH_3$ | $R^2$ = α-Methylbenzyl | n = 1 |
| 34) | Y = $CH_2$ | X = m, p-Hydroxyphenyl | $R^1$ = $CH_3$ | $R^2$ = Cyclohexyl | n = 1 |
| 35) | Y = $CH_2$ | X = m, p-Hydroxyphenyl | $R^1$ = $CH_3$ | $R^2$ = Benzyl | n = 1 |
| 36) | Y = $CH_2$ | X = m, p-Hydroxyphenyl | $R^1$ = $CH_3$ | $R^2$ = α-Methylbenzyl | n = 1 |
| 37) | Y = $CH_2$ | X = 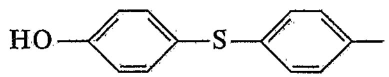 | $R^1$ = $CH_3$ | $R^2$ = Cyclohexyl | n = 1 |
| 38) | Y = $CH_2$ | X = 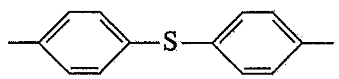 | $R^1$ = $CH_3$ | $R^2$ = Cyclohexyl | n = 2 |
| 39) | Y = $CH_2$ | X = 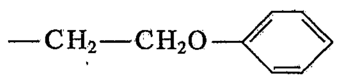 | $R^1$ = $CH_3$ | $R^2$ = Cyclohexyl | n = 1 |
| 40) | Y = $CH_2$ | X = 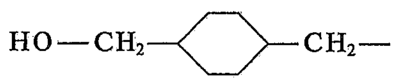 | $R^1$ = $CH_3$ | $R^2$ = Cyclohexyl | n = 1 |
| 41) | Y = $CH_2$ | X = 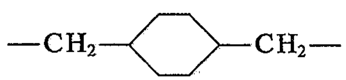 | $R^1$ = $CH_3$ | $R^2$ = Cyclohexyl | n = 2 |
| 42) | Y = $CH_2$ | X = $HO(CH_2)_6$— | $R^1$ = $CH_3$ | $R^2$ = Cyclohexyl | n = 1 |
| 43) | Y = $CH_2$ | X = —$(CH_2)_6$— | $R^1$ = $CH_3$ | $R^2$ = Cyclohexyl | n = 2 |
| 44) | Y = $CH_2$ | X = $HOCH_2CH_2SCH_2CH_2$— | $R^1$ = $CH_3$ | $R^2$ = Cyclohexyl | n = 1 |

Fortsetzung

| | | | | | |
|---|---|---|---|---|---|
| 45) | $Y = CH_2$ | $X = CH_2CH_2SCH_2CH_2—$ | $R^1 = CH_3$ | $R^2$ = Cyclohexyl | $n = 2$ |
| 46) | $Y = CH_2$ | $X = HOCH_2CH_2(OCH_2CH_2)_6OCH_2CH_2—$ | $R^1 = CH_3$ | $R^2$ = Cyclohexyl | $n = 1$ |
| 47) | $Y = CH_2$ | $X = CH_2CH_2(OCH_2CH_2)_6OCH_2CH_2—$ | $R^1 = CH_3$ | $R^2$ = Cyclohexyl | $n = 2$ |
| 48) | $Y = CH_2$ | X = 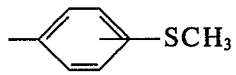 | $R^1 = CH_3$ | $R^2$ = Cyclohexyl | $n = 1$ |
| 49) | $Y = CH_2$ | X = 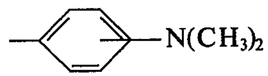 | $R^1 = CH_3$ | $R^2$ = Cyclohexyl | $n = 1$ |
| 50) | $Y = CH_2$ | X = 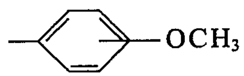 | $R^1 = CH_3$ | $R^2$ = Cyclohexyl | $n = 1$ |
| 51) | $Y = CH_2$ | X = Dodecyl | $R^1 = CH_3$ | $R^2$ = Cyclohexyl | $n = 1$ |
| 52) | Y = 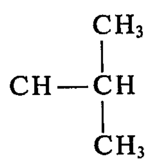 | X = H | $R^1 = CH_3$ | $R^2$ = Cyclohexyl | $n = 1$ |
| 53) | $Y = CH_2$ | X = 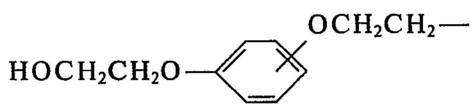 | $R^1 = CH_3$ | $R^2$ = Cyclohexyl | $n = 2$ |
| 54) | Y = S | X = H | $R^1 = CH_3$ | $R^2$ = Cyclohexyl | $n = 1$ |
| 55) | Y = S | X = H | $R^1 = CH_3$ | $R^2$ = Cyclohexyl | $n = 1$ |
| 56) | Y = S | X = H | $R^1 = CH_3$ | $R^2$ = α-Methylbenzyl | $n = 1$ |
| 57) | $Y = CH—CH_3$ | X = H | $R^1 = CH_3$ | $R^2$ = α-Methylbenzyl | $n = 1$ |
| 58) | Y = S | X = H | H | $R^2$ = Benzyl | $n = 1$ |

Geeignete Ausgangsprodukte für die Herstellung der erfindungsgemäßen Verbindungen sind

1) Bisphenole der allgemeinen Struktur V

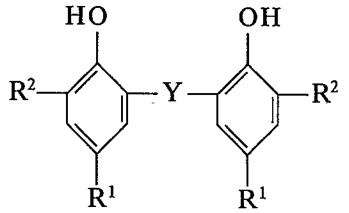

(V)

in der

$R^1$, $R^2$ und Y die oben angegebene Bedeutung haben.

Im einzelnen kann $R^1$ besonders bevorzugt sein $CH_3$, $C_2H_5$, $HC(CH_3)_2$, $C(CH_3)_3$, $C(CH_3)_2C_2H_5$, Isononyl, Isooctyl, Benzyl, Styryl, $\alpha$-Methylstyryl, Cyclohexyl, Cyclopentyl und

Y = S, $CH_2$, $CH—CH_3$, $CH—CH(CH_3)_2$, $CHCH_2CH_2CH_3$ und CH— 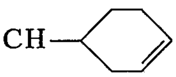

Beispielsweise können folgende Verbindungen zur Herstellung der erfindungsgemäßen Stabilisatoren eingesetzt werden:

1) Bis-(2-hydroxy-3-cyclohexyl-5-methyl-phenyl)-methan,
Bis-(2-hydroxy-3-cyclohexyl-5-methyl-phenyl)-sulfid,
Bis-(2-hydroxy-3-benzyl-5-methyl-phenyl)-methan,
Bis-(2-hydroxy-3-benzyl-5-methyl-phenyl)-sulfid,
Bis-(2-hydroxy-3-styryl-5-methyl-phenyl)-methan,
Bis-(2-hydroxy-3-styryl-5-methyl-phenyl)-sulfid,
Bis-(2-hydroxy-3-cyclohexyl-5-methyl-phenyl)-isobutan-1,1,
Bis-(2-hydroxy-3-styryl-5-methyl-phenyl)-isobutan-1,1,
Bis-(2-hydroxy-3-cyclohexyl-5-methyl-phenyl)-äthan-1,1.

2) Phosphorigsäurederivate der Formel VI

$$PW_3 \qquad (VI)$$

darin bedeutet:

W Halogen oder $OR^7$,

$R^7$ steht für H, $C_1$–$C_{15}$-Alkyl-, $C_5$–$C_6$-Cycloalkyl-, $C_7$–$C_{15}$-Aralkyl- und $C_6$–$C_{10}$-Aryl-, wobei $R^7$ = H jeweils nur einmal in $POR^7$ auftreten darf,

W kann bevorzugt im einzelnen sein: Cl, Br und $R^7$ = H, $CH_3$, $C_2H_5$, $C_4H_9$, Phenyl, Kresyl, Isononylphenyl.

Geeignet sind beispielsweise:

Phosphortrichlorid, Trimethylphosphit, Triäthylphosphit, Triphenylphosphit, Trikresylphosphit, Tris-isononylphenylphosphit, Dimethylphosphit, Diäthylphosphit, Diphenylphosphit und Dikresylphosphit, und

3) Mono- und Polyhydroxyverbindungen der allgemeinen Formel VII

$$X(OH)_n \qquad (VII)$$

in der

n und X die oben angegebene Bedeutung haben.

Geeignete Mono- und Polyhydroxyverbindungen sind beispielsweise o-, m-, p-Kresol, 2,4-Dimethylphenol, 3,5-Dimethylphenol, Isononylphenol, Benzylphenol, Styrylphenol, p-Methyl-mercapto-phenol, o-, m-, p-Methoxyphenol, m-(N,N-Dimethylamino)-phenol, o-, p-Phenylphenol, p-Hydroxy-phenol, 4,4'-Dihydroxydiphenylmethan, 4,4'-Dihydroxydiphenylpropan-2,2, 4,4'-Dihydroxydiphenyl, 4,4'-Dihydroxydiphenyläther, 4,4'-Dihydroxydiphenylsulfid, Wasser, Methanol, Äthanol, Octanol, Dodecanol, Stearylalkohol, Phenoxyäthanol, Benzylalkohol, Cyclohexandimethanol, perhydriertes 4,4'-Dihydroxydicyclohexylpropan-2,2, Hexandiol-1,6, Diglykol, Triglykol, Tetraglykol, Octaäthylenglykol, Thiodiglykol, Bisoxäthylbisphenol A, Bisoxäthylhydrochinon, oxäthyliertes Glycerin und oxäthyliertes Pentaerythrit mt 3—8 Oxyäthylresten.

Die erfindungsgemäßen Verbindungen werden nach an sich bekannten Verfahren hergestellt. Dabei sind folgende Verfahrensvarianten möglich.

Man kann z. B. die als Ausgangsprodukte verwendeten Bisphenole mit Triaryl- oder Trialkylphosphiten vorzugsweise Triphenyl-, Trimethyl- oder Triäthylphosphit bei Temperaturen zwischen 50 und 300°C, vorzugsweise 80—250°C miteinander zur Reaktion bringen und die dabei gebildeten Hydroxyverbindungen wie Phenol, Methanol oder Äthanol abdestillieren, was im Falle hochsiedender Hydroxyverbindungen zweckmäßig bei vermindertem Druck geschieht. Zur Beschleunigung der Reaktion können typische Umesterungskatalysatoren verwendet werden, z. B. Alkalimetalle und ihre Derivate, wie Oxide, Hydroxide, Carbonate und ihre Salze mit Carbonsäuren, Verbindungen des 4wertigen Titans wie Titantetrabutylat und Titantetraphenolat und zinnorganische Verbindungen wie Dibutylzinndilaurat, Dibutylzinnoxid und Dibutylzinndiphenolat.

Das Molverhältnis dieser Reaktionspartner ist nicht sehr kritisch. Im allgemeinen setzt man sie im Verhältnis 1 : 1 ein. Es ist aber durchaus möglich, das Phosphit in einem bis zu 10fachen Überschuß einzusetzen und den Überschuß nach der Reaktion zurückzugewinnen.

Nachdem aus dem Reaktionsgemisch zwei Äquivalente der ursprünglich im Phosphit gebundenen Hydroxyverbindung abgetrennt sind, verbleibt der dritte in neu gebildetem Phosphorigsäureester des Bisphenols, d. h. wenn Triphenylphosphit als Ausgangsprodukt gewählt wurde, so ist X in der allgemeinen Formel I ein Phenylrest.

In den Fällen, in denen X verschieden sein soll von den Resten, die mit dem Ausgangsphosphit eingebracht werden, wird er in einem nachfolgenden Umesterungsschritt ausgetauscht. Wenn z. B. X=$\beta$-Naphthyl gewünscht wird, so setzt man das zunächst gebildete neue Bisphenolphosphit (X=Phenyl) mit der entsprechenden Hydroxyverbindung also hier $\beta$-Naphthol um und destilliert Phenol ab. Für diesen zweiten Reaktionsschritt gelten die gleichen Bedingungen wie sie oben für den ersten geschildert sind. Hier sollten allerdings die Molverhältnisse entsprechend den Zielprodukten gewählt werden. Im soeben dargelegten Beispiel wird also $\beta$-Naphthol im Molverhältnis 1 : 1 mit dem cyclischen Phosphorigsäureester umgesetzt. Eine Dihydroxyverbindung, z. B. Hexandiol-1,6 kann je nach Zielprodukt im Molverhältnis 1 : 1 oder $^1/_2$ : 1 mit dem Bisphenolphosphit umgesetzt werden, eine Trihydroxyverbindung im Verhältnis 1 : 1, $^1/_3$ : 1 und $^2/_3$ : 1 usw.

Die Hydroxyverbindung, über die der neue Rest X eingeführt werden soll, beispielsweise $\beta$-Naphthol, kann allerdings auch zunächst mit dem Trialkyl- oder Triarylphosphit zur Reaktion gebracht werden und dann mit dem Bisphenol. Sie kann aber auch gleichzeitig mit dem Bisphenol eingesetzt werden.

Für den Fall, daß X=H ist, geht man zweckmäßig von den Dialkyl- bzw. Diarylphosphiten aus und entfernt dann destillativ zwei Äquivalente Hydroxyverbindung aus dem Reaktionsgemisch. Die Dialkyl- oder Diarylphosphite lassen sich leicht aus den Trialkyl- oder Triarylphosphiten durch Zugabe der berechneten Menge Wasser in situ erzeugen.

Grundsätzlich kann der Rest X auch vom vorgefertigten Bisphenolphosphit durch Wasser abgespalten werden. Dies ist jedoch im allgemeinen aufwendiger.

Ein weiterer Zugang zu den erfindungsgemäßen Verbindungen besteht in der Umsetzung der Bisphenole und der die Gruppe X tragenden Hydroxyverbindungen mit Phosphortrihalogeniden, insbesondere Phosphortrichlorid, unter Abspaltung von Halogenwasserstoffen. Diese Methode bietet jedoch keine wesentlichen Vorteile gegenüber den oben beschriebenen.

Mit den erfindungsgemäßen Stabilisatoren können synthetische Polyamide, wie sie durch Polykondensation von Diaminen mit Dicarbonsäuren, durch Polymerisation von Lactamen oder durch Polykondensation von Aminocarbonsäuren erhalten werden, stabilisiert werden. Bevorzugt werden aliphatische Polyamide, insbesondere solche aus Adipinsäure und Hexamethylendiamin oder aus Caprolactam bzw. solche Mischpolyamide, in denen die letztgenannten Komponenten die Hauptbestandteile darstellen, stabilisiert.

Die Stabilisierung mit den erfindungsgemäßen Verbindungen bringt folgende Vorteile: Die Polyamide werden außerordentlich wirksam gegen thermooxydativen Abbau geschützt. Verfärbungen durch den Stabilisator auch in Gegenwart sulfidischer Pigmente treten nicht auf. Die Stabilisatoren blühen nicht aus und verursachen keine Flecken und Fehlstellen an der Oberfläche von Polyamidartikeln. Wichtige elektrische Eigenschaften werden gegenüber ionisch stabilisiertem Polyamid ganz entscheidend verbessert. Selbst stabilisatorfreies Polyamid wird hier überraschenderweise noch erheblich übertroffen.

Die erfindungsgemäßen Stabilisatoren werden in Mengen von 0,02—5 Gew.-%, bevorzugt 0,05—2 Gew.-%, besonders bevorzugt 0,1—1,5 Gew.-%, bezogen auf das zu stabilisierende Polyamid, eingesetzt. Die Einarbeitung kann sowohl vor oder während der Herstellung der Polyamide als auch nach der Polymerisation erfolgen, wobei die Stabilisatoren in Substanz oder als Lösung in einem inerten Lösungsmittel oder einem der Polyamid bildenden Ausgangsstoffe oder als Konzentrat in einem geeigneten Polymeren, bevorzugt in Polyamid zum Einsatz kommen. Die Einarbeitung erfolgt bevorzugt in die Polyamidschmelze unter Verwendung bekannter Mischvorrichtungen, wie Extrudern, Knetern, statischen Mischern und Rührern. Zusätzlich können den Polyamiden verschiedene üblicherweise verwendete Zuschläge unterschiedlicher Art wie Gleit- und Entformungsmittel, Nukleierungsmittel, Pigmente, Farbstoffe, verstärkende oder nicht verstärkende Füllstoffe wie

Mineralfasern, Glas- und Asbestfasern, Mikrokugeln aus Glas, Talkum, Siliciumdioxid oder Glimmer, Antistatika, Weichmachern und UV-Stabilisatoren beigegeben werden.

Die nach dem erfindungsgemäßen Verfahren stabilisierten Polyamide eignen sich hervorragend für die Herstellung von techn. Seide für Fischnetze, Treibriemen, Förderbändern, Reifencord oder Formkörpern, die einer thermischen Belastung bei freiem Zutritt von Luft oder Sauerstoff ausgesetzt sind.

Beispiel 1

Phosphorigsäureester aus Phenol und Bis-(2-hydroxy-3-cyclohexyl-5-methyl-phenyl)-methan

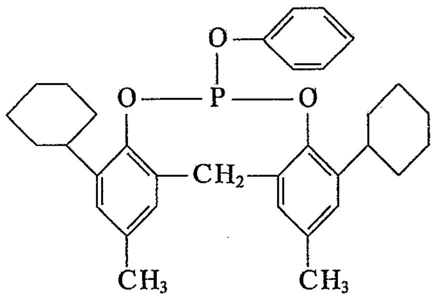

Ein Gemisch aus 392 g (1 Mol) Bis-(2-hydroxy-3-cyclohexyl-5-methyl-phenyl)-methan, 310 g (1 Mol) Triphenylphosphit, 10 g Diphenylphosphit und 0,4 g Lithiumhydroxid wird bei 1600—1733 Pa (12—13 Torr) in 10 h von 160—225°C unter Rühren erhitzt und dabei 188 g (2 Mol) Phenol abdestilliert. Als Rückstand erhält man 512 g einer schwach gelblichen glasig erstarrenden Schmelze. Das Produkt wird nach Lösen in heißem Ligroin kristallin erhalten.

| | | | | | |
|---|---|---|---|---|---|
| Schmp. 164—6°C | Molgew. | gef. | 508 | | |
| | | ber. | 514,65 | | |
| $C_{33}H_{39}PO_3$ | %C | ber. | 77,02 | gef. | 76,67 |
| | H | | 7,64 | | 8,00 |
| | P | | 6,02 | | 6,24 |
| | O | | 9,33 | | 9,10 |

Beispiel 2

Phosphorigsäureester aus Phenol und Bis-(2-hydroxy-3-styryl-5-methyl-phenyl)-methan

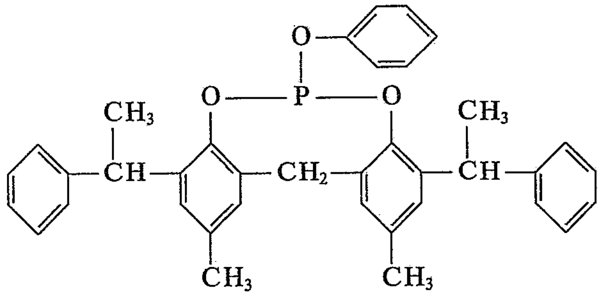

Ein Gemisch von 218 g (0,5 Mol) Bis-(2-hydroxy-3-styryl-5-methyl-phenyl)-methan und 155 g (0,5 Mol) Triphenylphosphit wird bei 2133—2400 Pa (16—18 Torr) in 8 h von 170—250°C unter Rühren erhitzt, wobei 94 g (1 Mol) Phenol abdestillieren. Man erhält 276 g einer schwach gelben zu einer spröden Masse erstarrenden Schmelze.

| | | | | | |
|---|---|---|---|---|---|
| $C_{37}H_{35}PO_3$ (558,66) | %C | ber. | 79,55 | gef. | 79,09 |
| | H | | 6,32 | | 6,57 |
| | P | | 5,54 | | 5,12 |

## Beispiel 3

Phosphorigsäureester aus Phenol und Bis-(2-hydroxy-3-benzyl-5-methyl)-methan

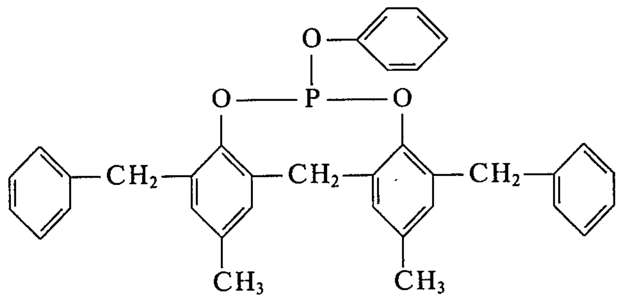

Ein Gemisch aus 204 g (0,5 Mol) Bis-(2-hydroxy-3-benzyl-5-methyl-phenyl)-methan und 155 g Triphenylphosphit wird bei 1866,5 Pa (14 Torr) in 6 h von 160—230° C erhitzt, wobei insgesamt 92 g Phenol übergehen. Man erhält 263 g eines gelblichen Harzes.

## Beispiel 4

Phosphorigsäureester aus Bis-(2-hydroxy-3-cyclohexyl-5-methyl-phenyl)-methan und 1 Mol Octaäthylenglykol

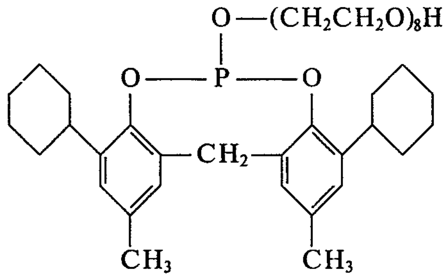

Ein Gemisch aus 514 g (1 Mol) des Phosphorigsäureesters nach Beispiel 1 und 370 g (1 Mol) Octaäthylenglykol wird in 2,5 h von 200—250° C bei 2666 Pa (20 Torr) erhitzt. Dabei destillieren 90 g Phenol ab. Das Reaktionsprodukt ist ein gelbes Harz (790 g).

## Beispiel 5

Phosphorigsäureester aus Bis-(2-hydroxy-3-cyclohexyl-5-methyl-phenyl)-methan und 0,5 Mol Octaäthylenglykol

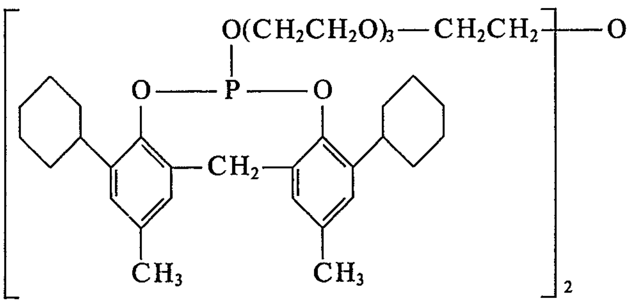

Ein Gemisch aus 514 g (1 Mol) des Phosphorigsäureesters nach Beispiel 1 und 185 g (0,5 Mol) Octaäthylenglykol wird in 4 h von 230—250° C bei 4000 Pa (30 Torr) erhitzt. Dabei destillieren 89 g Phenol ab. Man erhält als Reaktionsprodukt ein gelbes Harz (610 g).

Beispiel 6

Phosphorigsäureester aus Bis-(2-hydroxy-3-cyclohexyl-5-methyl-phenyl)-methan und Stearylalkohol

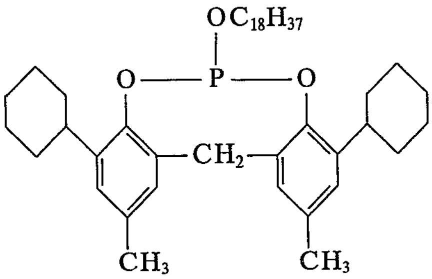

Ein Gemisch von 103 g (0,2 Mol) Phosphorigsäureester nach Beispiel 1 und 53 g (0,2 Mol) Stearylalkohol werden bei 2133 Pa (16 Torr) in 12 h von 155 auf 245° C erhitzt. Dabei destillieren 16 g Phenol über. Der Rückstand bildet ein gelbliches opakes Harz.

Beispiel 7

Phosphorigsäureester des Bis-(2-hydroxy-3-cyclohexyl-5-methyl-phenyl)-methans

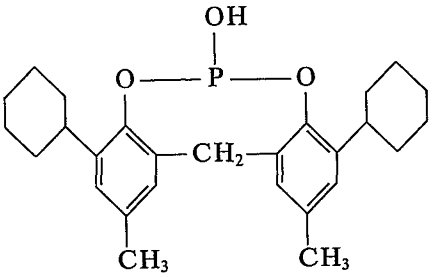

Ein Gemisch aus 392 g (1 Mol) Bis-(2-hydroxy-3-cyclohexyl-5-methyl-phenyl)-methan, 310 g ( 1Mol) Triphenylphosphit und 18 g (1 Mol) Wasser wird unter Normaldruck und $N_2$ bis 180° C erhitzt. Man läßt abkühlen auf 100° C und erhitzt dann bei 3333 Pa (25 Torr) in 2,5 h von 100 auf 200° C. Dabei gehen 270 g Phenol über. Als Rückstand verbleibt ein fast farbloses, langsam kristallisierendes Produkt (450 g). Schmp. 180—1° C (aus Xylol) MG 403 (ber. 438).

Beispiel 8

Phosphorigsäureester des Bis-(2-hydroxy-3-benzyl-5-methyl-phenyl)-sulfids

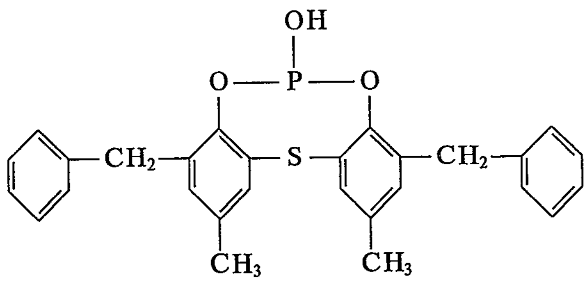

Ein Gemisch von 213 g Bis-(2-hydroxy-3-benzyl)-5-methyl-phenyl)-sulfid (0,5 Mol), 155 g (0,5 Mol) Triphenylphosphit und 9 g (0,5 Mol) $H_2O$ wird zunächst unter $N_2$ und Normaldruck auf 180° C gebracht und nach Abkühlen auf 100° C bei 3333 Pa (25 Torr) in 2 h von 100° C auf 200° C. 135 g Phenol destillieren über. Das Reaktionsprodukt (250 g) stellt ein gelbliches Harz dar.

Beispiel 9

Phosphorigsäureester des Bis-(2-hydroxy-3-benzyl-5-methyl-phenyl)-methans

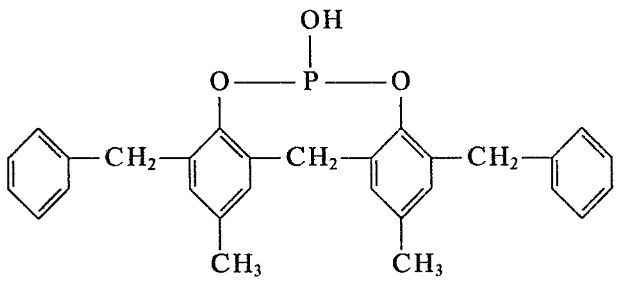

Ein Gemisch aus 77,5 g (0,25 Mol) Triphenylphosphit, 4,5 g (0,25 Mol) $H_2O$ und 102 g (0,25 Mol) Bis-(2-hydroxy-3-benzyl-5-methyl-phenyl)-methan wird wie in Beispiel 7 umgesetzt. Man erhält 69 g Phenol als Destillat und 118 g der Titelverbindung als gelbliches Harz.

Beispiel 10

Phosphorigsäureester des Bis-(2-hydroxy-3-cyclohexyl-5-methyl-phenyl)-sulfids

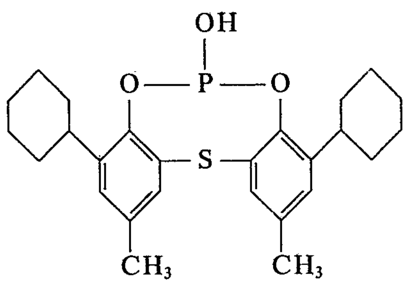

Ein Gemisch von 41 g (0,1 Mol) Bis-(2-hydroxy-3-cyclohexyl-5-methyl-phenyl)-sulfid, 31 g (0,1 Mol) Triphenylphosphit und 1,8 g (0,1 Mol) $H_2O$ wird unter $N_2$ und Rühren auf 180°C gebracht, auf 100°C abgekühlt und dann bei 1600—1733 Pa (12—13 Torr) in 5 h von 100—250°C erhitzt, wobei 27 g Phenol übergehen. Als Reaktionsprodukt bleiben 45 g eines festen hellgelben Harzes. Aus Ligroin erhält man Kristalle mit einem Schmp. von 122°C.

| | | | | | |
|---|---|---|---|---|---|
| $C_{26}H_{33}PO_3S$ (456,59) | %C | ber. | 68,35 | gef. | 68,13 |
| | H | | 7,29 | | 7,52 |
| | P | | 6,78 | | 6,43 |
| | S | | 7,02 | | 7,28 |

Beispiel 11

Phosphorigsäureester aus Bis-(2-hydroxy-3-cyclohexyl-5-methyl-phenyl)-methan und β-Naphthol

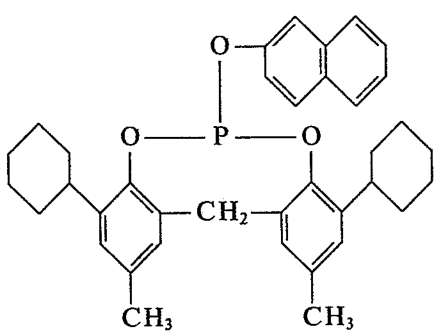

51 g (0,1 Mol) der Verbindung aus Beispiel 1 und 14 g (0,1 Mol) β-Naphthol werden in Gegenwart von 0,05 g Lithiumhydroxid als Katalysator bei 115—118 mbar und 220—280°C Sumpftemperatur unter Abdestillieren von Phenol (8,5 g) miteinander umgesetzt. Man erhält ein gelbliches trübes Hartharz (56,5 g), das aus Petroläther Kristalle vom Schmp. 128°C liefert.

Beispiel 12

Phosphorigsäureester aus Bis-(2-hydroxy-3-cyclohexyl-5-methyl-phenyl)-methan und 4,4'-Dihydroxydiphenyl-propan-2,2

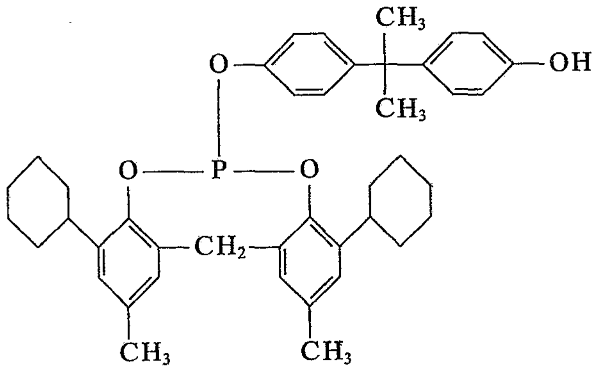

103 g (0,2 Mol) der Verbindung aus Beispiel 1 und 46 g (0,2 Mol) 4,4'-Dihydroxy-diphenyl-propan-2,2 werden bei 1,5—2,0 mbar und einer Sumpftemperatur von 140—207° C unter Abdestillieren von Phenol (18 g) miteinander umgesetzt. Man erhält 128 g eines gelblichen trüben Hartharzes. Aus Petroläther/Xylol erhält man Kristalle vom Schmp. 129—131° C.

Beispiel 13

Phosphorigsäureester aus Bis-(2-hydroxy-3-cyclohexyl-5-methyl-phenyl)-methan und 4-Hydroxy-diphenyl

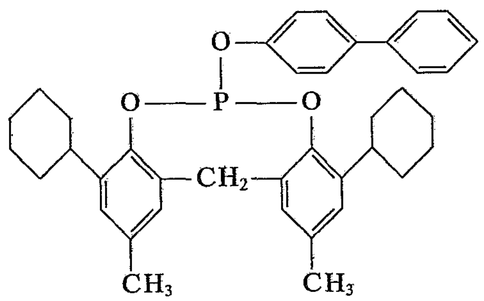

128 g (0,25 Mol) des Phosphorigsäureesters aus Beispiel 1 und 42 g (0,25 Mol) 4-Hydroxydiphenyl werden in Gegenwart von 0,1 g Lithiumhydroxid bei 155—220° C Sumpftemperatur 2266,5 Pa (17 Torr) unter Abdestillieren von Phenol (22 g) in 2—3 h miteinander umgesetzt. Man erhält ein schwach gelbliches Hartharz (148 g), das sich aus Ligroin kristallin erhalten läßt, Schmp. 165—170° C.

Beispiel 14

Phosphorigsäureester aus Bis-(2-hydroxy-3-cyclohexyl-5-methyl-phenyl)-methan und 4,4'-Dihydroxy-diphenylsulfid

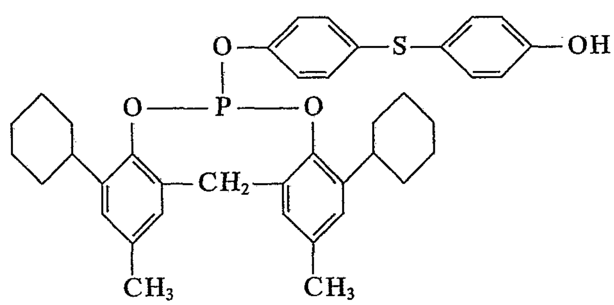

128 g (0,25 Mol) der Substanz aus Beispiel 1 und 46 g (0,25 Mol) 4,4-Dihydroxy-diphenyl-sulfid werden bei 130—220° C Sumpftemperatur und 2400 Pa (18 Torr) in 1—2 h miteinander umgesetzt,

wobei 22 g Phenol abdestillieren. Das verbleibende hellbraune Harz (153 g) erhält man kristallin aus Ligroin/Xylol, Schmp. 128—133° C.

## Beispiel 15

Phosphorigsäureester aus N,N-Dimethyl-m-amino-phenol und Bis-(2-hydroxy-3-cyclohexyl-5-methyl-phenyl)-methan

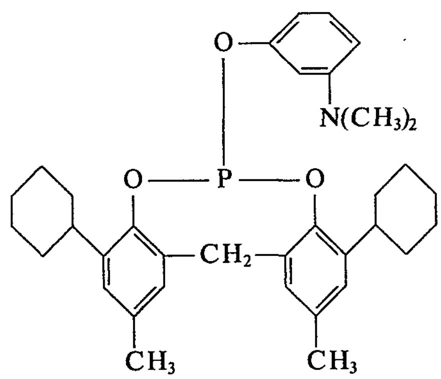

Ein Gemisch aus 51,5 g (0,1 Mol) der Substanz aus Beispiel 1 und 13,8 g (0,1 Mol) N,N-Dimethyl-m-amino-phenol wird bei 2266,5 Pa (17 Torr) in 3 h von 150 auf 195° C aufgeheizt und dabei unter Rühren über eine kleine Kolonne Phenol abdestilliert (9,1 g). Man erhält 56 g eines spröden braunen Harzes.

## Beispiel 16

Phosphorigsäureester aus Thiodiglykol und Bis-(2-hydroxy-3-styryl-5-methyl-phenyl)-methan

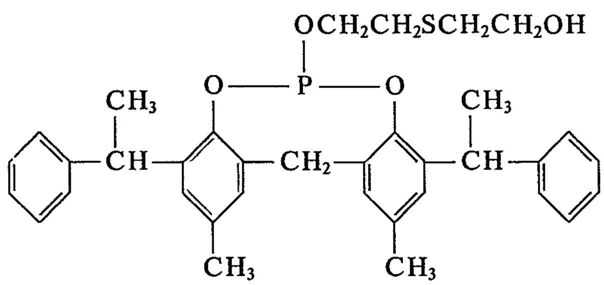

Ein Gemisch aus 55,9 g (0,1 Mol) der Substanz aus Beispiel 2 und 12,2 g (0,1 Mol) Thiodiglykol wird analog Beispiel 15 umgesetzt. Man erhält 57 g eines gelben spröden Harzes.

## Beispiel 17

Phosphorigsäureester aus Triäthanolamin und Bis-(2-hydroxy-3-styryl-5-methyl-phenyl)-methan

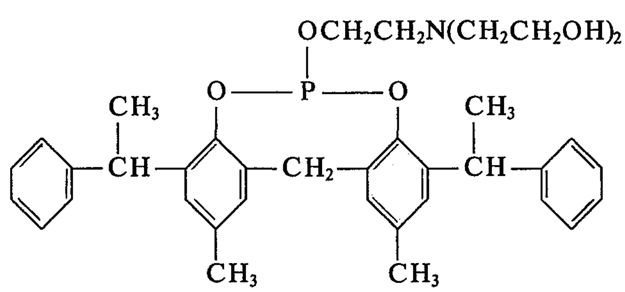

Ein Gemisch aus 55,9 g (0,1 Mol) der Substanz aus Beispiel 2 und 14,9 g (0,1 Mol) Triäthanolamin wird analog Beispiel 15 umgesetzt. Man erhält neben 9,0 g Phenoldestillat 70 g eines gelben weichen Harzes.

Prüfung der Stabilisatorwirkung im unverstärkten Polyamid-6

Zur Prüfung der Stabilisatorwirkung wurde die zu prüfende Substanz in einer Konzentration von 0,5 Gew.-% durch einen Extruderdurchgang homogen in 6-Polyamid ($\eta_{rel} = 4,0$) eingearbeitet. Das so stabilisierte Material wurde zu Normkleinstäben verspritzt und einer Wärmealterung unter Luftzutritt bei 150±0,5°C unterworfen. Nach 1, 2, 4, 8 usw. Tagen wurden jeweils 8 Normkleinstäbe entnommen und nach zweistündiger Abkühlung im Exsiccator auf Schlagzähigkeit nach DIN 53 453 untersucht. Die Prüfung gilt als bestanden, wenn mindestens die Hälfte der Prüfkörper nicht gebrochen ist oder wenn die durchschnittliche Schlagzähigkeit der gebrochenen Stäbe oberhalb 30 kJ/m$^2$ liegt. Die Bewertung der Stabilisatorwirkung geschieht nach einer Stufeneinteilung entsprechend der folgenden Tabelle:

| Wärmealterungszeit bis zum Nicht-Bestehen der Schlagprüfung | 1 | 2 | 4 | 8 | 16 | etc. Tagen |
|---|---|---|---|---|---|---|
| Wirksamkeitsstufe des Stabilisators | 0 | 1 | 2 | 3 | 4 | ect. |

Die Prüfung erfindungsgemäßer Stabilisatoren ergab die folgenden Ergebnisse:

| Stabilisator 0,5 Gew.-% aus Beispiel | Bewertung |
|---|---|
| 1 | 4 |
| 2 | 3 |
| 3 | 2–3 |
| 4 | 3 |
| 5 | 3 |
| 6 | 3 |
| 7 | 4 |
| 8 | 2–3 |
| 10 | 2–3 |
| 12 | 4–5 |

Sämtliche Stabilisatoren verursachen keine Verfärbungen beim Einarbeiten ins Polyamid.

Zum Vergleich wurden einige handelsübliche Kunststoffstabilisatoren und nicht erfindungsgemäße Phosphorigsäureester geprüft. Man erhielt folgende Ergebnisse:

| Stabilisator 0,5 Gew.-% | Bewertung |
|---|---|
| I | 0 |
| II | 1–2 |
| III | 1–2 |
| IV | 1–2 |
| V | 1–2 |
| VI | 0 |
| VII | 2 |

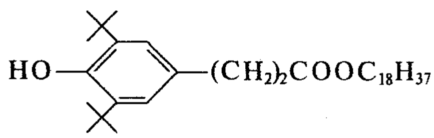
(Irganox 1076)® [1]) (I)

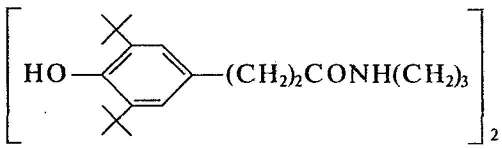
(Irganox 1098)® [1]) [2]) (II)

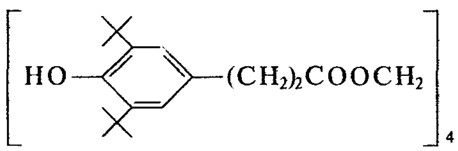
(Irganox 1010)® [1]) [2]) (III)

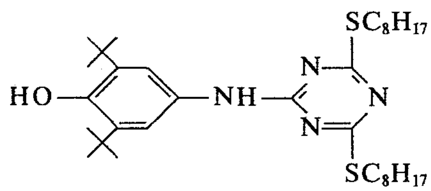
[1]) [2]) (IV)

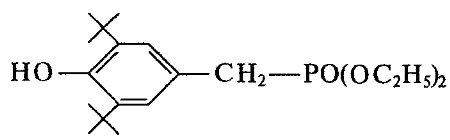
[1]) (V)

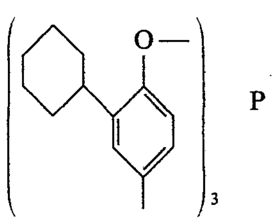
(VI)

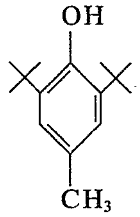

[3])　(VII)

[1]) Handelsprodukte der Ciba-Geigy.

[2]) Ausdrücklich für die Stabilisierung von Polyamid empfohlen (s. Firmenschriften der Ciba-Geigy Publ. Nr. 770.512/d/Str./10, Publ. Nr. 770.620/d/Str./10).

[3]) Handelsprodukt der Metallgesellschaft AG.

Prüfung der Stabilisatorwirkung im glasfaserverstärkten Polyamid-6

Die zu prüfende Substanz wurde in einer Konzentration von 0,5 Gew.-% durch einen Extruderdurchgang in glasfaserverstärktes 6-Polyamid (30% Glasfasern) eingearbeitet. Das so stabilisierte Material wurde zu Normkleinstäben verspritzt und einer Wärmealterung unter Luftzutritt bei 120±0,5°C unterworfen. Nach 7, 14, 21 Tagen wurden jeweils 8 Normkleinstäbe entnommen und nach zweistündiger Abkühlung im Exsiccator auf Schlagzähigkeit nach DIN 53 453 untersucht. Die Meßwerte in $kJ/m^2$ gehen aus der Tabelle hervor.

| Stabilisator | Wärmealterungszeit (Tage) | | | |
|---|---|---|---|---|
| | 0 | 7 | 14 | 21 |
| ohne (z. Vergleich) | 48,2 | 22,8 | 24,0 | 23,2 |
| aus Beispiel 7 | 50,5 | 35,5 | 34,7 | 30,4 |
| aus Beispiel 1 | 45,3 | 36,4 | 30,7 | 30,2 |
| II (z. Vergleich) | 49,9 | 31,8 | 26,2 | 22,8 |
| VII (z. Vergleich) | 48,9 | 29,9 | 22,5 | 24,1 |

Prüfung der Stabilisatorwirkung im glasfaserverstärkten Polyamid-66

Die zu prüfende Substanz wurde in einer Konzentration von 0,5 Gew.-% durch einen Extruderdurchgang homogen in glasfaserverstärktes 66-Polyamid (30% Glasfasern) eingearbeitet. Das so stabilisierte Material wurde zu Normkleinstäben verspritzt und einer Wärmealterung unter Luftzutritt bei 150±0,5°C unterworfen. Zur Prüfung wurden jeweils 8 Normkleinstäbe entnommen und nach 2stündiger Abkühlung im Exsiccator auf Schlagzähigkeit nach DIN 53 453 untersucht. Die Meßwerte in $kJ/m^2$ gehen aus der Tabelle hervor.

| Stabilisator | Wärmealterungszeit (Tage) | | | |
|---|---|---|---|---|
| | 0 | 1 | 4 | 8 |
| ohne (z. Vergleich) | 46,0 | 27,1 | 25,3 | 24,2 |
| aus Beispiel 7 | 45,0 | 54,6 | 36,2 | 30,2 |
| aus Beispiel 1 | 52,7 | 58,8 | 38,9 | 33,7 |
| aus Beispiel 6 | 44,1 | 37,1 | 29,5 | 28,2 |
| II (z. Vergleich) | 45,3 | 32,4 | 17,0 | 23,5 |

## Prüfung der elektrischen Eigenschaften von stabilisierten glasfaserverstärkten Polyamiden

Die zu prüfende Substanz wurde durch einen Extruderdurchgang homogen in glasfaserverstärktes Polyamid eingearbeitet, und gemäß der folgenden Tabelle wurde das so erhaltene Material auf seine elektrischen Eigenschaften geprüft.

Elektrische Eigenschaften von stabilisiertem, glasfaserverstärkten Polyamid

| Polyamid | Stabilisator | DIN 53 480 Kriechstrom-festigkeit KB (Stufe) | DIN 53 482 Oberflächen-widerstand $R_{oc}$ (Ohm) | | DIN 53 482 Spezif. Durch-gangs-widerstand (Ohm × cm) | | DIN 53 408 Elektrolyt. Korrosions-wirkung (Stufe) |
|---|---|---|---|---|---|---|---|
| | | | Trocken | Konditioniert | Trocken | Konditioniert | |
| PA 6 + 30% Glasfaser | ohne (z. Vergleich) | 475 | $2 \cdot 10^{15}$ | $2 \cdot 10^{13}$ | $6 \cdot 10^{15}$ | $5 \cdot 10^{12}$ | AN 1,6 |
| PA 6 + 30% Glasfaser | ion Stab. auf Cu-Basis | 325 | $2 \cdot 10^{13}$ | $5 \cdot 10^{12}$ | $3 \cdot 10^{15}$ | $4 \cdot 10^{11}$ | A/B 3 |
| PA 6 + 30% Glasfaser | 0,5% Beisp. 7 | 425 | $5 \cdot 10^{13}$ | $5 \cdot 10^{13}$ | $9 \cdot 10^{15}$ | $1 \cdot 10^{13}$ | AN 1,2 |
| PA 6 + 30% Glasfaser | 0,5% Beisp. 1 | 475 | $3 \cdot 10^{13}$ | $5 \cdot 10^{13}$ | $1 \cdot 10^{16}$ | $1 \cdot 10^{13}$ | AN 1,2 |
| PA 66 + 30% Glasfaser | ohne (z. Vergleich) | 550 | $3 \cdot 10^{13}$ | $3 \cdot 10^{12}$ | $5 \cdot 10^{15}$ | $2 \cdot 10^{12}$ | AN 1,6 |
| PA 66 + 30% Glasfaser | 0,5% Beisp. 7 | 575 | $3 \cdot 10^{13}$ | $1 \cdot 10^{12}$ | $6 \cdot 10^{15}$ | $1 \cdot 10^{12}$ | AN 1,2 |

Die Vergleichversuche zeigen, daß die erfindungsgemäßen Stabilisatoren den bekannten nichtionischen in der stabilisierenden Wirkung und den ionischen hinsichtlich der elektrischen Eigenschaften der sie enthaltenden Polyamide beträchtlich überlegen sind.

**Patentansprüche**

1. Phosphorigsäureester der allgemeinen Formel I

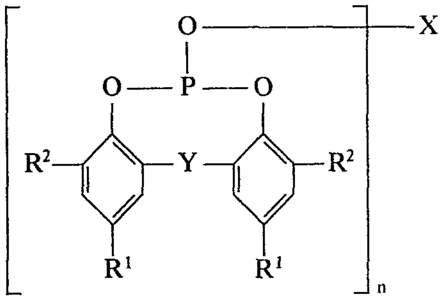

(I)

in welcher
$R^2$ einen Benzyl-, α-Methylbenzyl-, α,α-Dimethylbenzyl-, Cyclopentyl- oder Cyclohexylrest darstellt,
$R^1$ einen Alkylrest, einen Cycloalkylrest, einen Aralkylrest oder einen Arylrest bedeutet,
Y für S oder $HC-R^3$ steht, wobei $R^3 = H$, Alkyl- oder Cyclohexylrest sein kann,
X ein Wasserstoffatom, einen gegebenenfalls substituierten ein- bis vierbindigen geradkettigen oder verzweigten aliphatischen Rest, einen Aralkylrest oder einen aromatischen Rest bedeutet, wobei jeder der Reste olefinische Doppelbindungen und Heteroatome, vorzugsweise N, O und/oder S, enthalten kann, und
n eine ganze Zahl von 1—4 bedeutet, mit der Bedingung, daß für X = H, n = 1 ist.

2. Phosphorigsäureester gemäß Anspruch 1, dadurch gekennzeichnet, daß X für ein Wasserstoffatom oder

a) einen Rest der allgemeinen Fomel (II)

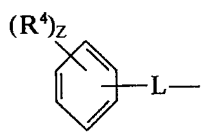

(II)

mit $R^4$ = Wasserstoff, —L—, Aryl-, ein kondensierter Ring, ein Alkyl-, Alkaryl-, Alkylmercapto-, Alkoxy-, β-Hydroxyalkoxyrest, eine OH-, Amino-SH-Gruppe oder ein

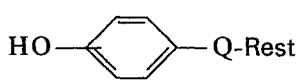

mit Q = eine einfache Bindung, O, S, $O-(CH_2)_2-O$ oder $C_1-C_4$-Alkyliden,
Z = 1 oder 2, und
L = eine einfache Bindung oder ein Alkylenoxyrest

b) oder einen Rest der allgemeinen Formel (III)

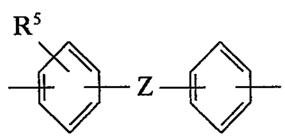

(III)

mit $R^5$ = OH, H,
Z = eine einfache Bindung, ein Alkylidenrest, O, S oder $O-(CH_2)_2-O$,

c) oder einen ein- oder zweiwertigen Alkylrest, der durch Phenyl, OH oder Phenoxy substituiert und gegebenenfalls über Ätherbrücken oder S-Brücken verbunden sein kann, einen Alkylcyclohexyl- oder Tetralylrest, oder

d) einen Rest der allgemeinen Formel IV

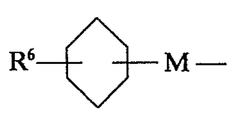

(IV)

mit $R^6$ = eine Bindung, ein Hydroxylalkyl-, ein $\omega$-Hydroxylalkoxy-, Alkylenrest, H, OH oder —M— und

M = einen Alkylen- oder Alkylencycloalkylrest

e) oder für

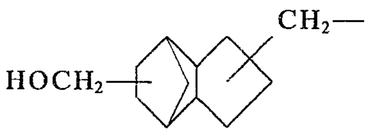

oder

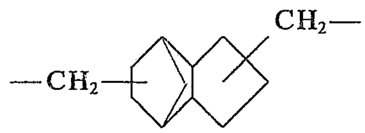

f) oder Oxyalkylierungsprodukte von Glycerin, Trimethylolpropan oder Pentaerythrit mit 3–8 Oxyäthyl- oder Oxypropylresten stehen.

3. Phosphorsäureester gemäß den Ansprüchen 1 und 2, dadurch gekennzeichnet, daß in der allgemeinen Formel (I) Y, X, $R^1$, $R^2$ und n folgende Bedeutung haben:

| | | | | |
|---|---|---|---|---|
| Y = $CH_2$ | X = Phenyl | $R^1$ = $CH_3$ | $R^2$ = Cyclohexyl | n = 1 |
| Y = $CH_2$ | X = Phenyl | $R^1$ = $CH_3$ | $R^2$ = Benzyl | n = 1 |
| Y = $CH_2$ | X = Phenyl | $R^1$ = $CH_3$ | $R^2$ = $\alpha$-Methylbenzyl | n = 1 |
| Y = S | X = Phenyl | $R^1$ = $CH_3$ | $R^2$ = Cyclohexyl | n = 1 |
| Y = S | X = Phenyl | $R^1$ = $CH_3$ | $R^2$ = Benzyl | n = 1 |
| Y = S | X = Phenyl | $R^1$ = $CH_3$ | $R^2$ = $\alpha$-Methylbenzyl | n = 1 |
| Y = $CH_2$ | X = o-, m-, p-Kresyl | $R^1$ = $CH_3$ | $R^2$ = $\alpha$-Methylbenzyl | n = 1 |
| Y = $CH_2$ | X = o-, m-, p-Kresyl | $R^1$ = $CH_3$ | $R^2$ = Benzyl | n = 1 |
| Y = $CH_2$ | X = o-, m-, p-Kresyl | $R^1$ = $CH_3$ | $R^2$ = Cyclohexyl | n = 1 |
| Y = $CH_2$ | X = Isononylphenyl | $R^1$ = $CH_3$ | $R^2$ = Cyclohexyl | n = 1 |
| Y = $CH_2$ | X = Isononylphenyl | $R^1$ = $CH_3$ | $R^2$ = Benzyl | n = 1 |
| Y = $CH_2$ | X = Isononylphenyl | $R^1$ = $CH_3$ | $R^2$ = $\alpha$-Methylbenzyl | n = 1 |
| Y = $CH_2$ | X = $\beta$-Naphthyl | $R^1$ = $CH_3$ | $R^2$ = Cyclohexyl | n = 1 |
| Y = $CH_2$ | X = $\beta$-Naphthyl | $R^1$ = $CH_3$ | $R^2$ = Benzyl | n = 1 |
| Y = $CH_2$ | X = $\beta$-Naphthyl | $R^1$ = $CH_3$ | $R^2$ = $\alpha$-Methylbenzyl | n = 1 |
| Y = $CH_2$ | X = H | $R^1$ = $CH_3$ | $R^2$ = Cyclohexyl | n = 1 |
| Y = $CH_2$ | X = H | $R^1$ = $CH_3$ | $R^2$ = Benzyl | n = 1 |
| Y = $CH_2$ | X = H | $R^1$ = $CH_3$ | $R^2$ = $\alpha$-Methylbenzyl | n = 1 |
| Y = $CH_2$ | X = Benzylphenyl | $R^1$ = $CH_3$ | $R^2$ = Cyclohexyl | n = 1 |
| Y = $CH_2$ | X = Benzylphenyl | $R^1$ = $CH_3$ | $R^2$ = Benzyl | n = 1 |
| Y = $CH_2$ | X = Benzylphenyl | $R^1$ = $CH_3$ | $R^2$ = $\alpha$-Methylbenzyl | n = 1 |
| Y = $CH_2$ | X = Phenylphenyl | $R^1$ = $CH_3$ | $R^2$ = Cyclohexyl | n = 1 |
| Y = $CH_2$ | X = Phenylphenyl | $R^1$ = $CH_3$ | $R^2$ = Benzyl | n = 1 |
| Y = $CH_2$ | X = Phenylphenyl | $R^1$ = $CH_3$ | $R^2$ = $\alpha$-Methylbenzyl | n = 1 |
| Y = $CH_2$ | X = 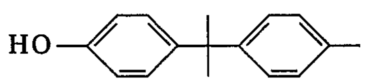 | $R^1$ = $CH_3$ | $R^2$ = Cyclohexyl | n = 1 |
| Y = $CH_2$ | X = 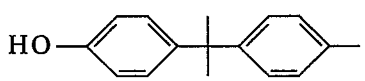 | $R^1$ = $CH_3$ | $R^2$ = Benzyl | n = 1 |

Fortsetzung

| | | | | |
|---|---|---|---|---|
| Y = $CH_2$ | X = 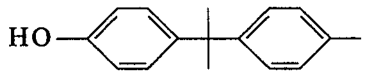 | $R^1$ = $CH_3$ | $R^2$ = $\alpha$-Methylbenzyl | n = 1 |
| Y = $CH_2$ | X = 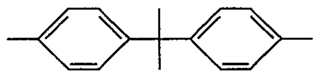 | $R^1$ = $CH_3$ | $R^2$ = Cyclohexyl | n = 2 |
| Y = $CH_2$ | X = 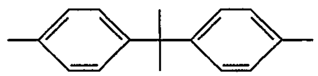 | $R^1$ = $CH_3$ | $R^2$ = Benzyl | n = 2 |
| Y = $CH_2$ | X = 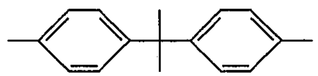 | $R^1$ = $CH_3$ | $R^2$ = $\alpha$-Methylbenzyl | n = 2 |
| Y = $CH_2$ | X = Stearyl | $R^1$ = $CH_3$ | $R^2$ = Cyclohexyl | n = 1 |
| Y = $CH_2$ | X = Stearyl | $R^1$ = $CH_3$ | $R^2$ = Benzyl | n = 1 |
| Y = $CH_2$ | X = Stearyl | $R^1$ = $CH_3$ | $R^2$ = $\alpha$-Methylbenzyl | n = 1 |
| Y = $CH_2$ | X = m, p-Hydroxyphenyl | $R^1$ = $CH_3$ | $R^2$ = Cyclohexyl | n = 1 |
| Y = $CH_2$ | X = m, p-Hydroxyphenyl | $R^1$ = $CH_3$ | $R^2$ = Benzyl | n = 1 |
| Y = $CH_2$ | X = m, p-Hydroxyphenyl | $R^1$ = $CH_3$ | $R^2$ = $\alpha$-Methylbenzyl | n = 1 |
| Y = $CH_2$ | X = 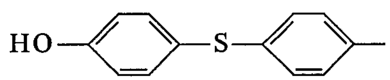 | $R^1$ = $CH_3$ | $R^2$ = Cyclohexyl | n = 1 |
| Y = $CH_2$ | X = 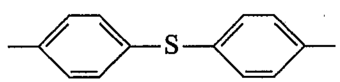 | $R^1$ = $CH_3$ | $R^2$ = Cyclohexyl | n = 2 |
| Y = $CH_2$ | X = 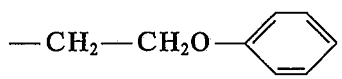 | $R^1$ = $CH_3$ | $R^2$ = Cyclohexyl | n = 1 |
| Y = $CH_2$ | X = 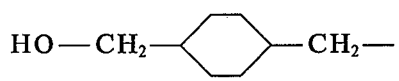 | $R^1$ = $CH_3$ | $R^2$ = Cyclohexyl | n = 1 |
| Y = $CH_2$ | X = 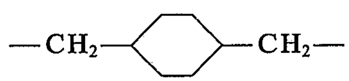 | $R^1$ = $CH_3$ | $R^2$ = Cyclohexyl | n = 2 |
| Y = $CH_2$ | X = $HO(CH_2)_6-$ | $R^1$ = $CH_3$ | $R^2$ = Cyclohexyl | n = 1 |
| Y = $CH_2$ | X = $-(CH_2)_6-$ | $R^1$ = $CH_3$ | $R^2$ = Cyclohexyl | n = 2 |
| Y = $CH_2$ | X = $HOCH_2CH_2SCH_2CH_2-$ | $R^1$ = $CH_3$ | $R^2$ = Cyclohexyl | n = 1 |

Fortsetzung

| | | | | |
|---|---|---|---|---|
| Y = $CH_2$ | X = $CH_2CH_2SCH_2CH_2$— | $R^1$ = $CH_3$ | $R^2$ = Cyclohexyl | n 2 |
| Y = $CH_2$ | X = $HOCH_2CH_2(OCH_2CH_2)_6OCH_2CH_2$— | $R^1$ = $CH_3$ | $R^2$ = Cyclohexyl | n 1 |
| Y = $CH_2$ | X = $CH_2CH_2(OCH_2CH_2)_6OCH_2CH_2$— | $R^1$ = $CH_3$ | $R^2$ = Cyclohexyl | n 2 |
| Y = $CH_2$ | X = 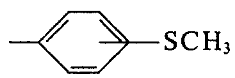 | $R^1$ = $CH_3$ | $R^2$ = Cyclohexyl | n 1 |
| Y = $CH_2$ | X = 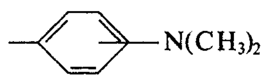 | $R^1$ = $CH_3$ | $R^2$ = Cyclohexyl | n 1 |
| Y = $CH_2$ | X = 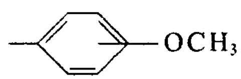 | $R^1$ = $CH_3$ | $R^2$ = Cyclohexyl | n 1 |
| Y = $CH_2$ | X = Dodecyl | $R^1$ = $CH_3$ | $R^2$ = Cyclohexyl | n = 1 |
| Y = 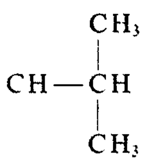 | X = H | $R^1$ = $CH_3$ | $R^2$ = Cyclohexyl | n = 1 |
| Y = $CH_2$ | X = 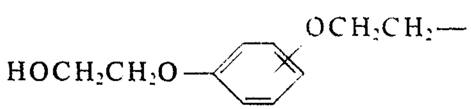 | $R^1$ = $CH_3$ | $R^2$ = Cyclohexyl | n = 2 |
| Y = S | X = H | $R^1$ = $CH_3$ | $R^2$ = Cyclohexyl | n = 1 |
| Y = S | X = H | $R^1$ = $CH_3$ | $R^2$ = Cyclohexyl | n = 1 |
| Y = S | X = H | $R^1$ = $CH_3$ | $R^2$ = α-Methylbenzyl | n = 1 |
| Y = $CH—CH_3$ | X = H | $R^1$ = $CH_3$ | $R^2$ = α-Methylbenzyl | n = 1 |
| Y = S | X = H | $R^1$ = $CH_3$ | $R^2$ = Benzyl | n = 1 |

4. Verwendung der Phosphorigsäureester gemäß Ansprüchen 1—3 zur Stabilisierung von Polyamiden.
5. Polyamide enthaltend 0,02—5 Gew.-% der Phosphorigsäureester gemäß Ansprüchen 1—3.
6. Polyamide enthaltend 0,05—2 Gew.-% der Phosphorigsäureester gemäß Ansprüchen 1—3.
7. Glasfaserverstärkte Polyamide enthaltend 0,02—5 Gew.-% der Phosphorigsäureester gemäß Ansprüchen 1—3.
8. Polyamid-6 oder Polyamid-6,6 enthaltend 0,02—5 Gew.-% Phosphorigsäureester gemäß Ansprüchen 1—3.

**Claims**

1. Phosphorous acid esters of the general formula (I):

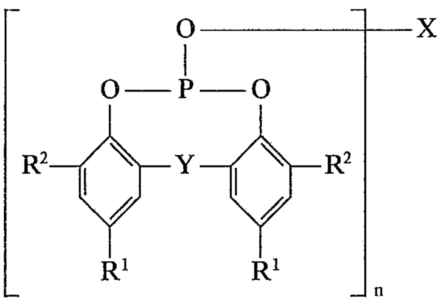

(I)

wherein

$R^2$ is a benzyl, $\alpha$-methylbenzyl, $\alpha,\alpha$-dimethylbenzyl, cyclopentyl or cyclohexyl radical,
$R^1$ is an alkyl, a cycloalkyl radical, an aralkyl or an aryl radical,
Y is a sulphur atom or a group $HC-R^3$ in which $R^3$ may be a hydrogen atom, an alkyl or cyclohexyl radical,
X is a hydrogen atom, an optionally substituted single-bond to four-bond straight-chain or branched-chain aliphatic radical, an aralkyl radical or an aromatic radical, each of which radicals may contain olefinic double bonds and hetero atoms, preferably N, O and/or S atoms, and
n is an integer of from 1 to 4, provided that when X is a hydrogen atom the n is equal to 1.

2. Phosphorous acid esters according to Claim 1, characterised in that X is a hydrogen atom or

a) a radical of the general formula (II)

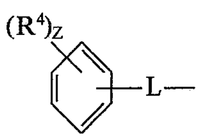

(II)

in which

$R^4$ is a hydrogen atom, —L—, a condensed ring, an aryl, alkyl, alkaryl, alkyl mercapto, alkoxy, or $\beta$-hydroxy alkoxy radical, or an OH-, amino- or SH-group or a group

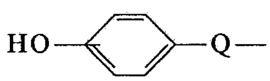

in which Q is a single bond, an O or S atom, an $O-(CH_2)_2-O$ or $C_1-C_4$-alkylidene group, and

Z 1 or 2, and

L is a single bond or an alkyleneoxy radical; or

b) a radical of the general formula (III)

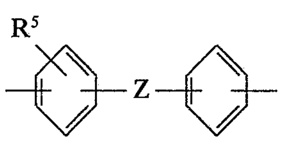

(III)

in which

$R^5$ is a hydroxy group or a hydrogen atom and

Z is a single bond, an alkylidene radical, an O or S atom or a $O-(CH_2)_2-O$, group; or

c) an monofunctional or difunctional alkyl radical which may be substituted by phenyl, OH or phenoxy and which may optionally be attached through ether bridges or S-bridges, an alkyl cyclohexyl or tetralyl radical; or

d) a radical of the general formula (IV)

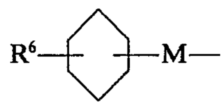

(IV)

in which

$R^6$ is a bond, a hydroxyalkyl, a ω-hydroxy-alkoxy, or an alkylene radical, a hydrogen atom, a hydroxy group or –M– and

M is an alkylene or alkylene cycloalkyl radical; or

e)

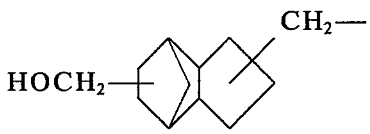

or

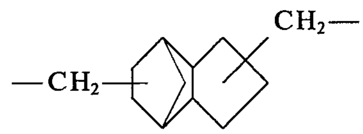

or

f) an oxyalkylation product of glycerol, trimethylol propane or pentaerythritol containing from 3 to 8 oxyethyl or oxypropyl radicals.

3. Phosphorous acid esters according to Claims 1 and 2, characterised in that in the general formula (I) Y, X, $R^1$, $R^2$ and n have the following meaning:

| | | | | |
|---|---|---|---|---|
| Y = $CH_2$ | X = phenyl | $R^1$ = $CH_3$ | $R^2$ = cyclohexyl | n = 1 |
| Y = $CH_2$ | X = phenyl | $R^1$ = $CH_3$ | $R^2$ = benzyl | n = 1 |
| Y = $CH_2$ | X = phenyl | $R^1$ = $CH_3$ | $R^2$ = $\alpha$-methylbenzyl | n = 1 |
| Y = S | X = phenyl | $R^1$ = $CH_3$ | $R^2$ = cyclohexyl | n = 1 |
| Y = S | X = phenyl | $R^1$ = $CH_3$ | $R^2$ = benzyl | n = 1 |
| Y = S | X = phenyl | $R^1$ = $CH_3$ | $R^2$ = $\alpha$-methylbenzyl | n = 1 |
| Y = $CH_2$ | X = o-, m-, p-cresyl | $R^1$ = $CH_3$ | $R^2$ = $\alpha$-methylbenzyl | n = 1 |
| Y = $CH_2$ | X = o-, m-, p-cresyl | $R^1$ = $CH_3$ | $R^2$ = benzyl | n = 1 |
| Y = $CH_2$ | X = o-, m-, p-cresyl | $R^1$ = $CH_3$ | $R^2$ = cyclohexyl | n = 1 |
| Y = $CH_2$ | X = isononylphenyl | $R^1$ = $CH_3$ | $R^2$ = cyclohexyl | n = 1 |
| Y = $CH_2$ | X = isononylphenyl | $R^1$ = $CH_3$ | $R^2$ = benzyl | n = 1 |
| Y = $CH_2$ | X = isononylphenyl | $R^1$ = $CH_3$ | $R^2$ = $\alpha$-methylbenzyl | n = 1 |
| Y = $CH_2$ | X = $\beta$-naphthyl | $R^1$ = $CH_3$ | $R^2$ = cyclohexyl | n = 1 |
| Y = $CH_2$ | X = $\beta$-naphthyl | $R^1$ = $CH_3$ | $R^2$ = benzyl | n = 1 |
| Y = $CH_2$ | X = $\beta$-naphthyl | $R^1$ = $CH_3$ | $R^2$ = $\alpha$-methylbenzyl | n = 1 |
| Y = $CH_2$ | X = H | $R^1$ = $CH_3$ | $R^2$ = cyclohexyl | n = 1 |
| Y = $CH_2$ | X = H | $R^1$ = $CH_3$ | $R^2$ = benzyl | n = 1 |
| Y = $CH_2$ | X = H | $R^1$ = $CH_3$ | $R^2$ = $\alpha$-methylbenzyl | n = 1 |
| Y = $CH_2$ | X = benzylphenyl | $R^1$ = $CH_3$ | $R^2$ = cyclohexyl | n = 1 |
| Y = $CH_2$ | X = benzylphenyl | $R^1$ = $CH_3$ | $R^2$ = benzyl | n = 1 |
| Y = $CH_2$ | X = benzylphenyl | $R^1$ = $CH_3$ | $R^2$ = $\alpha$-methylbenzyl | n = 1 |
| Y = $CH_2$ | X = phenylphenyl | $R^1$ = $CH_3$ | $R^2$ = cyclohexyl | n = 1 |
| Y = $CH_2$ | X = phenylphenyl | $R^1$ = $CH_3$ | $R^2$ = benzyl | n = 1 |
| Y = $CH_2$ | X = phenylphenyl | $R^1$ = $CH_3$ | $R^2$ = $\alpha$-methylbenzyl | n = 1 |
| Y = $CH_2$ | X = 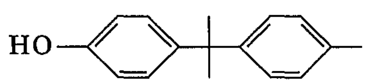 | $R^1$ = $CH_3$ | $R^2$ = cyclohexyl | n = 1 |
| Y = $CH_2$ | X = 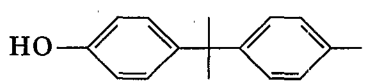 | $R^1$ = $CH_3$ | $R^2$ = benzyl | n = 1 |

| | | | | |
|---|---|---|---|---|
| Y = $CH_2$ | X = HO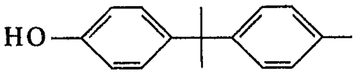 | $R^1$ = $CH_3$ | $R^2$ = α-methylbenzyl | n = 1 |
| Y = $CH_2$ | X = 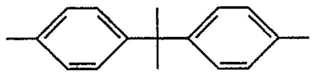 | $R^1$ = $CH_3$ | $R^2$ = cyclohexyl | n = 2 |
| Y = $CH_2$ | X = 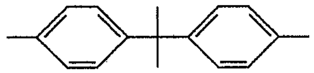 | $R^1$ = $CH_3$ | $R^2$ = benzyl | n = 2 |
| Y = $CH_2$ | X = 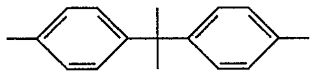 | $R^1$ = $CH_3$ | $R^2$ = α-methylbenzyl | n = 2 |
| Y = $CH_2$ | X = stearyl | $R^1$ = $CH_3$ | $R^2$ = cyclohexyl | n = 1 |
| Y = $CH_2$ | X = stearyl | $R^1$ = $CH_3$ | $R^2$ = benzyl | n = 1 |
| Y = $CH_2$ | X = stearyl | $R^1$ = $CH_3$ | $R^2$ = α-methylbenzyl | n = 1 |
| Y = $CH_2$ | X = m, p-hydroxyphenyl | $R^1$ = $CH_3$ | $R^2$ = cyclohexyl | n = 1 |
| Y = $CH_2$ | X = m, p-hydroxyphenyl | $R^1$ = $CH_3$ | $R^2$ = benzyl | n = 1 |
| Y = $CH_2$ | X = m, p-hydroxyphenyl | $R^1$ = $CH_3$ | $R^2$ = α-methylbenzyl | n = 1 |
| Y = $CH_2$ | X = HO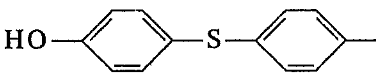 | $R^1$ = $CH_3$ | $R^2$ = cyclohexyl | n = 1 |
| Y = $CH_2$ | X = 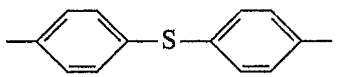 | $R^1$ = $CH_3$ | $R^2$ = cyclohexyl | n = 2 |
| Y = $CH_2$ | X = $—CH_2—CH_2O—$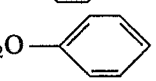 | $R^1$ = $CH_3$ | $R^2$ = cyclohexyl | n = 1 |
| Y = $CH_2$ | X = $HO—CH_2—$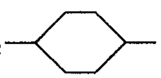$—CH_2—$ | $R^1$ = $CH_3$ | $R^2$ = cyclohexyl | n = 1 |
| Y = $CH_2$ | X = $—CH_2—$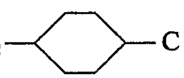$—CH_2—$ | $R^1$ = $CH_3$ | $R^2$ = cyclohexyl | n = 2 |
| Y = $CH_2$ | X = $HO(CH_2)_6—$ | $R^1$ = $CH_3$ | $R^2$ = cyclohexyl | n = 1 |
| Y = $CH_2$ | X = $—(CH_2)_6—$ | $R^1$ = $CH_3$ | $R^2$ = cyclohexyl | n = 2 |
| Y = $CH_2$ | X = $HOCH_2CH_2SCH_2CH_2—$ | $R^1$ = $CH_3$ | $R^2$ = cyclohexyl | n = 1 |

| | | | | |
|---|---|---|---|---|
| Y = $CH_2$ | X = $CH_2CH_2SCH_2CH_2$— | $R^1$ = $CH_3$ | $R^2$ = cyclohexyl | n = 2 |
| Y = $CH_2$ | X = $HOCH_2CH_2(OCH_2CH_2)_6OCH_2CH_2$— | $R^1$ = $CH_3$ | $R^2$ = cyclohexyl | n = 1 |
| Y = $CH_2$ | X = $CH_2CH_2(OCH_2CH_2)_6OCH_2CH_2$— | $R^1$ = $CH_3$ | $R^2$ = cyclohexyl | n = 2 |
| Y = $CH_2$ | X = 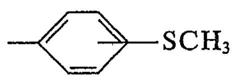 | $R^1$ = $CH_3$ | $R^2$ = cyclohexyl | n = 1 |
| Y = $CH_2$ | X = 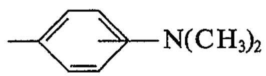 | $R^1$ = $CH_3$ | $R^2$ = cyclohexyl | n = 1 |
| Y = $CH_2$ | X = 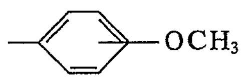 | $R^1$ = $CH_3$ | $R^2$ = cyclohexyl | n = 1 |
| Y = $CH_2$ | X = dodecyl | $R^1$ = $CH_3$ | $R^2$ = cyclohexyl | n = 1 |
| Y = 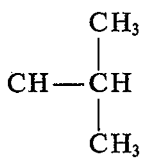 | X = H | $R^1$ = $CH_3$ | $R^2$ = cyclohexyl | n = 1 |
| Y = $CH_2$ | X = 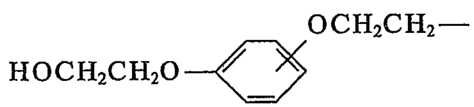 | $R^1$ = $CH_3$ | $R^2$ = cyclohexyl | n = 2 |
| Y = S | X = H | $R^1$ = $CH_3$ | $R^2$ = cyclohexyl | n = 1 |
| Y = S | X = H | $R^1$ = $CH_3$ | $R^2$ = cyclohexyl | n = 1 |
| Y = S | X = H | $R^1$ = $CH_3$ | $R^2$ = $\alpha$-methylbenzyl | n = 1 |
| Y = CH—$CH_3$ | X = H | $R^1$ = $CH_3$ | $R^2$ = $\alpha$-methylbenzyl | n = 1 |
| Y = S | X = H | $R^1$ = $CH_3$ | $R^2$ = benzyl | n = 1 |

4. The use of the phosphorous acid esters according to Claims 1—3, for stabilising polyamides.

5. Polyamides containing from 0.02 to 5% by weight of the phosphorous acid esters according to Claims 1—3.

6. Polyamides containing 0.05 to 2% by weight of the phosphorous acid esters according to Claims 1—3.

7. Glass-fibre-reinforced polyamides containing from 0.02 to 5% by weight of the phosphorous acid esters according to Claims 1—3.

8. Polyamide-6 or polyamide-6.6 containing from 0.02 to 5% by weight of the phosphorous acid esters according to Claims 1—3.

**Revendications**

1. Esters d'acide phosphoreux de formule générale I:

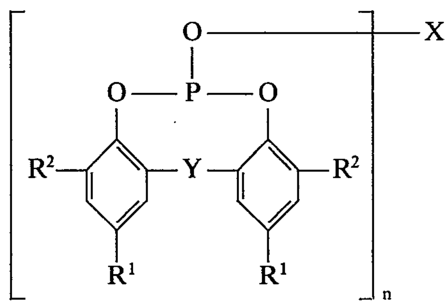

(I)

dans laquelle

$R^2$ représente un groupe benzyle, α-méthylbenzyle, α,α-diméthylbenzyle, cyclopentyle ou cyclohexyle,

$R^1$ représente un groupe alkyle, cycloalkyle, aralkyle ou aryle,

Y représente S ou $HC-R^3$, $R^3$ pouvant être un atome d'hydrogène, un groupe alkyle ou cyclohexyle,

X représente un atome d'hydrogène, un radical aliphatique à chaîne droite ou ramifiée de 1 à 4 liaisons et éventuellement substitué, un radical aralkyle ou un radical aromatique, chacun des radicaux pouvant contenir des doubles liaisons oléfiniques et des hétéro-atomes, de préférence, N, O et/ou S, et

n représente un nombre entier de 1 à 4 à condition que, si X représente un atome d'hydrogène, n soit égal à 1.

2. Esters d'acide phosphoreux suivant la revendication 1, caractérisés en ce que X représente un atome d'hydrogène ou

a) un radical de formule générale (II):

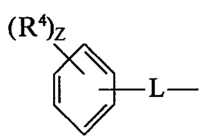

(II)

où

$R^4$ représente un atome d'hydrogène, –L–, un groupe aryle, un noyau condensé, un groupe alkyle, alcaryle, alkylmercapto, alcoxy, β-hydroxyalcoxy, OH, amino ou SH, ou encore un radical

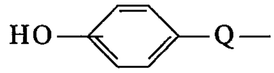

où Q représente une liaison simple, O, S, $O-(CH_2)_2-O$ ou un groupe alkylidène en $C_1-C_4$,

Z représente 1 ou 2, et

L représente une liaison simple ou un radical alkylène-oxy,

b) ou un radical de formule générale III:

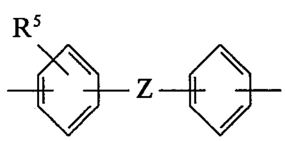

(III)

dans laquelle

$R^5$ OH, H,

Z une liaison simple, un radical alkylidène, O, S ou $O-(CH_2)_2-O$,

c) ou un groupe alkyle monovalent ou bivalent qui peut être substitué par un groupe phényle, OH ou phénoxy et qui peut éventuellement être relié par des ponts éther ou S, un groupe alkylcyclohexyle ou un groupe tétrallyle, ou

d) un radical de formule générale IV:

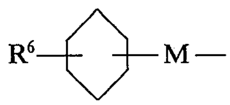

(IV)

dans laquelle

$R^6$ représente une liaison, un groupe hydroxyalkyle, un groupe $\omega$-hydroxyalcoxy, un groupe alcényle, H, OH ou –M–, et

M représente un groupe alkylène ou alkylène-cycloalkyle,

e) ou:

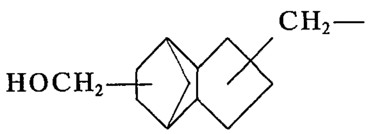

ou

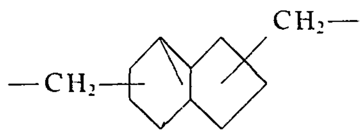

f) ou des produits d'oxyalkylation de la glycérine, du triméthylol-propane ou de la pentaérythrite comportant 3–8 radicaux oxyéthyle ou oxypropyle.

3. Esters d'acide phosphoreux suivant les revendications 1 et 2, caractérisés en ce que, dans la formule générale (I), Y, X, $R^1$, $R^2$ et n ont les significations suivantes:

| | | | | |
|---|---|---|---|---|
| $Y = CH_2$ | X = phényle | $R^1 = CH_3$ | $R^2$ = cyclohexyle | n = 1 |
| $Y = CH_2$ | X = phényle | $R^1 = CH_3$ | $R^2$ = benzyle | n = 1 |
| $Y = CH_2$ | X = phényle | $R^1 = CH_3$ | $R^2$ = $\alpha$-méthylbenzyle | n = 1 |
| Y = S | X = phényle | $R^1 = CH_3$ | $R^2$ = cyclohexyle | n = 1 |
| Y = S | X = phényle | $R^1 = CH_3$ | $R^2$ = benzyle | n = 1 |
| Y = S | X = phényle | $R^1 = CH_3$ | $R^2$ = $\alpha$-méthylbenzyle | n = 1 |
| $Y = CH_2$ | X = o-, m-, p-crésyle | $R^1 = CH_3$ | $R^2$ = $\alpha$-méthylbenzyle | n = 1 |
| $Y = CH_2$ | X = o-, m-, p-crésyle | $R^1 = CH_3$ | $R^2$ = benzyle | n = 1 |
| $Y = CH_2$ | X = o-, m-, p-crésyle | $R^1 = CH_3$ | $R^2$ = cyclohexyle | n = 1 |
| $Y = CH_2$ | X = isononylphényle | $R^1 = CH_3$ | $R^2$ = cyclohexyle | n = 1 |
| $Y = CH_2$ | X = isononylphényle | $R^1 = CH_3$ | $R^2$ = benzyle | n = 1 |
| $Y = CH_2$ | X = isononylphényle | $R^1 = CH_3$ | $R^2$ = $\alpha$-méthylbenzyle | n = 1 |
| $Y = CH_2$ | X = $\beta$-naphtyle | $R^1 = CH_3$ | $R^2$ = cyclohexyle | n = 1 |
| $Y = CH_2$ | X = $\beta$-naphtyle | $R^1 = CH_3$ | $R^2$ = benzyle | n = 1 |
| $Y = CH_2$ | X = $\beta$-naphtyle | $R^1 = CH_3$ | $R^2$ = $\alpha$-méthylbenzyle | n = 1 |
| $Y = CH_2$ | X = H | $R^1 = CH_3$ | $R^2$ = cyclohexyle | n = 1 |
| $Y = CH_2$ | X = H | $R^1 = CH_3$ | $R^2$ = benzyle | n = 1 |
| $Y = CH_2$ | X = H | $R^1 = CH_3$ | $R^2$ = $\alpha$-méthylbenzyle | n = 1 |
| $Y = CH_2$ | X = benzylphényle | $R^1 = CH_3$ | $R^2$ = cyclohexyle | n = 1 |
| $Y = CH_2$ | X = benzylphényle | $R^1 = CH_3$ | $R^2$ = benzyle | n = 1 |
| $Y = CH_2$ | X = benzylphényle | $R^1 = CH_3$ | $R^2$ = $\alpha$-méthylbenzyle | n = 1 |
| $Y = CH_2$ | X = phénylphényle | $R^1 = CH_3$ | $R^2$ = cyclohexyle | n = 1 |
| $Y = CH_2$ | X = phénylphényle | $R^1 = CH_3$ | $R^2$ = benzyle | n = 1 |
| $Y = CH_2$ | X = phénylphényle | $R^1 = CH_3$ | $R^2$ = $\alpha$-méthylbenzyle | n = 1 |
| $Y = CH_2$ | X = 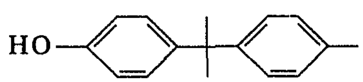 | $R^1 = CH_3$ | $R^2$ = cyclohexyle | n = 1 |
| $Y = CH_2$ | X = 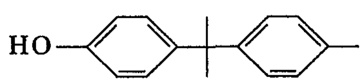 | $R^1 = CH_3$ | $R^2$ = benzyle | n = 1 |

| | | | | |
|---|---|---|---|---|
| Y = $CH_2$ | X = 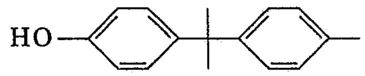 | $R^1$ = $CH_3$ | $R^2$ = α-méthylbenzyle | n = 1 |
| Y = $CH_2$ | X = 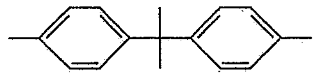 | $R^1$ = $CH_3$ | $R^2$ = cyclohexyle | n = 2 |
| Y = $CH_2$ | X = 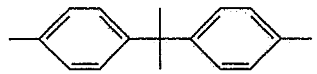 | $R^1$ = $CH_3$ | $R^2$ = benzyle | n = 2 |
| Y = $CH_2$ | X = 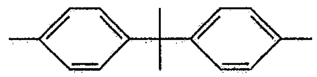 | $R^1$ = $CH_3$ | $R^2$ = α-méthylbenzyle | n = 2 |
| Y = $CH_2$ | X = stéaryle | $R^1$ = $CH_3$ | $R^2$ = cyclohexyle | n = 1 |
| Y = $CH_2$ | X = stéaryle | $R^1$ = $CH_3$ | $R^2$ = benzyle | n = 1 |
| Y = $CH_2$ | X = stéaryle | $R^1$ = $CH_3$ | $R^2$ = α-méthylbenzyle | n = 1 |
| Y = $CH_2$ | X = m, p-hydroxyphényle | $R^1$ = $CH_3$ | $R^2$ = cyclohexyle | n = 1 |
| Y = $CH_2$ | X = m, p-hydroxyphényle | $R^1$ = $CH_3$ | $R^2$ = benzyle | n = 1 |
| Y = $CH_2$ | X = m, p-hydroxyphényle | $R^1$ = $CH_3$ | $R^2$ = α-méthylbenzyle | n = 1 |
| Y = $CH_2$ | X = 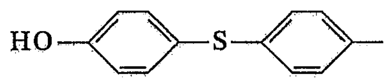 | $R^1$ = $CH_3$ | $R^2$ = cyclohexyle | n = 1 |
| Y = $CH_2$ | X = 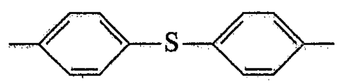 | $R^1$ = $CH_3$ | $R^2$ = cyclohexyle | n = 2 |
| Y = $CH_2$ | X = 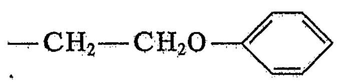 | $R^1$ = $CH_3$ | $R^2$ = cyclohexyle | n = 1 |
| Y = $CH_2$ | X = 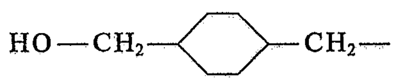 | $R^1$ = $CH_3$ | $R^2$ = cyclohexyle | n = 1 |
| Y = $CH_2$ | X = 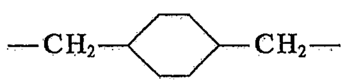 | $R^1$ = $CH_3$ | $R^2$ = cyclohexyle | n = 2 |
| Y = $CH_2$ | X = $HO(CH_2)_6$— | $R^1$ = $CH_3$ | $R^2$ = cyclohexyle | n = 1 |
| Y = $CH_2$ | X = —$(CH_2)_6$— | $R^1$ = $CH_3$ | $R^2$ = cyclohexyle | n = 2 |
| Y = $CH_2$ | X = $HOCH_2CH_2SCH_2CH_2$— | $R^1$ = $CH_3$ | $R^2$ = cyclohexyle | n = 1 |

| | | | | |
|---|---|---|---|---|
| Y = $CH_2$ | X = $CH_2CH_2SCH_2CH_2$— | $R^1$ = $CH_3$ | $R^2$ = cyclohexyle | n = 2 |
| Y = $CH_2$ | X = $HOCH_2CH_2(OCH_2CH_2)_6OCH_2CH_2$— | $R^1$ = $CH_3$ | $R^2$ = cyclohexyle | n = 1 |
| Y = $CH_2$ | X = $CH_2CH_2(OCH_2CH_2)_6OCH_2CH_2$— | $R^1$ = $CH_3$ | $R^2$ = cyclohexyle | n = 2 |
| Y = $CH_2$ | X = 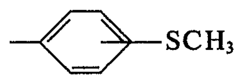 | $R^1$ = $CH_3$ | $R^2$ = cyclohexyle | n = 1 |
| Y = $CH_2$ | X = 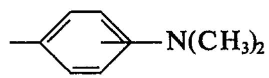 | $R^1$ = $CH_3$ | $R^2$ = cyclohexyle | n = 1 |
| Y = $CH_2$ | X = 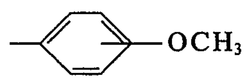 | $R^1$ = $CH_3$ | $R^2$ = cyclohexyle | n = 1 |
| Y = $CH_2$ | X = dodécyle | $R^1$ = $CH_3$ | $R^2$ = cyclohexyle | n = 1 |
| Y = 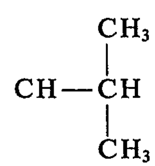 | X = H | $R^1$ = $CH_3$ | $R^2$ = cyclohexyle | n = 1 |
| Y = $CH_2$ | X = 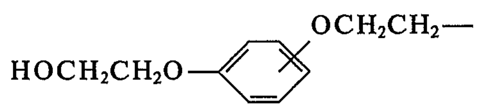 | $R^1$ = $CH_3$ | $R^2$ = cyclohexyle | n = 2 |
| Y = S | X = H | $R^1$ = $CH_3$ | $R^2$ = cyclohexyle | n = 1 |
| Y = S | X = H | $R^1$ = $CH_3$ | $R^2$ = cyclohexyle | n = 1 |
| Y = S | X = H | $R^1$ = $CH_3$ | $R^2$ = $\alpha$-méthylbenzyle | n = 1 |
| Y = CH—$CH_3$ | X = H | $R^1$ = $CH_3$ | $R^2$ = $\alpha$-méthylbenzyle | n = 1 |
| Y = S | X = H | $R^1$ = $CH_3$ | $R^2$ = benzyle | n = 1 |

4. Utilisation des esters d'acide phosphoreux suivant les revendications 1—3 pour la stabilisation des polyamides.
5. Polyamides contenant 0,02—5% en poids des esters d'acide phosphoreux suivant les revendications 1—3.
6. Polyamides contenant 0,05—2% en poids des esters d'acide phosphoreux suivant les revendications 1—3.
7. Polyamides renforcés de fibres de verre et contenant 0,02—5% en poids des esters d'acide phosphoreux suivant les revendications 1—3.
8. Polyamide-6 ou polyamide-6,6 contenant 0,02—5% en poids d'esters d'acide phosphoreux suivant les revendications 1—3.